# EUROPEAN PATENT SPECIFICATION

(11) **EP 4 425 007 B1**
(45) Date of publication and mention of the grant of the patent: **11.11.2026**
(21) Application number: 22886391.6
(22) Date of filing: 08.07.2022
(51) Int. Cl.: F16D 15/00, F16D 41/06, F16D 41/07, F16D 41/08

(54) **CAM CLUTCH**
NOCKENKUPPLUNG
EMBRAYAGE À CAMES

(30) Priority: 27.10.2021 JP 2021175723
(43) Date of publication of application: 04.09.2024
(73) Proprietor: Tsubakimoto Chain Co., Osaka 530-0005 (JP)
(72) Inventor: NAKAGAWA Eiichi, Osaka-shi, Osaka 530-0005 (JP)
(74) Representative: dompatent
(86) International application number: PCT/JP2022/027054
(87) International publication number: WO 2023/074054

(56) References cited:
- WO-A1-2020/235358
- WO-A1-2022/259736
- JP-A- 2008 106 801
- JP-A- 2017 101 786
- JP-A- 2020 190 255
- JP-A- H03 113 120
- JP-A- H05 196 065
- JP-A- S5 663 131
- JP-B2- 5 282 761

## Description

### [Technical Field]

The present invention relates to a cam clutch switchable between two or more operating modes selected from: a two-way free mode that allows relative rotation between an inner race and an outer race in the two directions; a one-way lock mode that prohibits relative rotation between the inner race and the outer race in either a forward direction or a reverse direction; and a two-way lock mode that prohibits relative rotation between the inner race and the outer race in the two directions.

### [Background Art]

Two-way clutches that are switchable between drive and freewheel modes in both forward and reverse directions are known as one type of clutch that controls torque transmission and interruption.

Some types of two-way clutches are configured to switch between a lock mode that prohibits relative rotation between the inner race and the outer race (transmits torque) and a free mode that allows relative rotation between the inner race and the outer race (interrupts torque) by tilting cams or sprags (see, for example, Patent Literature 1 and Patent Literature 2).

Patent Literature 3 describes a two-way clutch having an operating mode switch mechanism that allows switching between three operating modes, i.e., two-way free mode, one-way lock mode, and two-way lock mode, by controlling a retainer that retains rollers serving as power transmission members either at a neutral position or at one engaged position on a cam surface formed on the inner circumference of the outer race.

The two-way clutch described in Patent Literature 1 engages and separates an input-side rotating member and an output-side rotating member by means of sprags that are tilted in the same direction as the rotation direction of the input-side rotating member when the input-side rotating member is rotated relative to the output-side rotating member. This poses the problem of poor responsiveness due to a time lost when the rotation direction is switched. The two-way clutch described in Patent Literature 2 entails the same problem.

The two-way clutch described in Patent Literature 3 uses plate spring members to allow power transmission in both directions. However, this two-way clutch relies on friction for the power transmission and therefore the torque transmission capacity is small despite the size of the two-way clutch.

Patent Literature 4 describes a cam clutch in which an operation-mode switching mechanism forcibly tilts cams, biased toward an inner ring and an outer ring, independently of the rotational behavior of these rings. By providing a defined load support point between the cam's load application point and its distal contact with the bearing ring, the clutch achieves improved operational stability and high responsiveness.

Patent Literature 5 describes a cam clutch having an operation-mode switching mechanism that forces a plurality of cams, arranged between an inner ring and an outer ring, into an inclined attitude to switch between a free state and a lock state. The cam-attitude changing member is movable in the circumferential, radial, or axial direction independently of ring rotation.

Patent Literature 6 describes a two-way clutch in which an engaged state and a released state between an input-side and an output-side rotary body are achieved by tilting a sprag through rotation of an outer retainer relative to an inner retainer. The sprag is held between pockets of the inner and outer retainers arranged in the space between the input and output shafts, and the output shaft is coupled to the outer retainer so that both rotate integrally.

Patent Literature 7 describes a cam clutch having an operation-mode switching mechanism that selects among free, one-way, and locked states. The mechanism includes a cam-attitude changing portion movable axially independently of the rotation of an inner ring and an outer ring, and each cam is provided with a side-surface engaging portion directed toward this cam-attitude changing portion.

### [Citation List]

### [Patent Literature]

[Patent Literature 1] Japanese Patent Application Publication No. 2011-220509
[Patent Literature 2] Japanese Patent Application Publication No. 11-182589
[Patent Literature 3] Japanese Patent Application Publication No. 2014-219015
[Patent Literature 4] WO 2020/235358 A1
[Patent Literature 5] JP 2020 190255 A
[Patent Literature 6] JP 5 282761 B2
[Patent Literature 7] WO 2022/259736 A1

### [Summary of Invention]

### [Technical Problem]

In the cam clutches according to the patent literature above, the cam orientation changing members are arranged at constant relative positions with respect to the cams, so that all the cams change their orientation at the same timing when the operating modes of the cam clutch are switched.

To change the orientation of the cams to disengage the cams when the cam clutch is being subjected to a load torque, the operating mode switch mechanism needs to apply a disengaging torque equivalent to the load torque. This necessitates the use of a high-rigidity or large-size component as a cam orientation changing member, or of a large-scale drive source for the operating mode switch mechanism, leading to problems such as higher energy consumption or an increase in clutch size. Moreover, the large disengaging torque that is required could cause damage to the surfaces of the cams engaging with the inner race and outer race as well as the raceways of the inner race and outer race, and shorten the life of the clutch.

The present invention solves these problems, and aims to provide a cam clutch that allows, with a simple structure, easy switching between operating modes and high responsiveness, enables a reduction in energy consumption and size, and prolongs service life.

### [Solution to Problem]

The present invention achieves the above object by providing a cam clutch including: an inner race and an outer race provided to be rotatable about a same rotation axis relative to each other; a plurality of cams circumferentially arranged between the inner race and the outer race; and a biasing means biasing each of the plurality of cams to make contact with the inner race and the outer race, the cam clutch including an operating mode switch mechanism that switches operating modes of the cam clutch, the operating mode switch mechanism including cam orientation changing parts that are movable to force the cams to rotate independently of rotation movement of the inner race and the outer race, the cam orientation changing parts each being positioned for each of the cams, at least one cam orientation changing part having a different relative position with respect to one of the cams that corresponds to the cam orientation changing part from, with respect to other cam orientation changing parts, a relative position of cams that correspond to the other cam orientation changing parts, so that the one of the cams is rotated at a different timing from the other cams.

### [Advantageous Effects of Invention]

According to the invention set forth in claim 1, the cams can be rotated in a predetermined direction basically only by moving the cam orientation changing parts, which allows the cam clutch to readily switch the operating modes. Some of the plurality of cam orientation changing parts have a different relative position with respect to the cams. This means that the number of cams rotated at the same timing when the operating modes of the cam clutch are switched is reduced. Therefore, the disengaging torque required for disengaging the cams under a torque load can be reduced. This in turn obviates the necessity for making the cam orientation changing parts of a high-rigidity material, or increasing their size. Nor is it necessary to use a large-size drive source for the operating mode switch mechanism. Thus the cam clutch not only achieves high responsiveness but also allows for energy saving and size reduction. Moreover, the service life can be prolonged, as the engaging surfaces of the cams, the raceway of the inner race, the raceway of the outer race, and the cam orientation changing parts are less likely to suffer damage.

According to the configuration set forth in claim 2, the relative positions of the cam orientation changing parts with respect to the circumferentially equally spaced cams are varied by changing the positions of the cam orientation changing parts. Therefore, the disengaging torque can be reduced without compromising the torque transmission capacity of the cam clutch.

According to the configuration set forth in claim 3, when switching the operating modes of the cam clutch, the cam orientation is changed group by group at different timings. This allows for reduction of the disengaging torque as well as smooth mode switching.

According to the configuration set forth in claim 4, the operating mode switch mechanism is configured to move the cam orientation changing parts in a circumferential direction. This configuration does not cause complexity and requires only a minimal axial size increase. The cam orientation changing parts have an alignment pattern designed to include a section where three adjacent cam orientation changing parts are arranged with different position angles. This allows the cams to be rotated at different timings when the cam orientation changing parts are moved in the circumferential direction to switch the operating modes of the cam clutch. Thus this configuration effectively and reliably reduces the disengaging torque.

According to the configuration set forth in claims 5 and 6, the cam orientation changing parts are divided into two groups, and the orientation of the cams is changed stepwise group by group. This configuration thus enables quick mode switching with reduced disengaging torque without causing complexity. The configuration set forth in claim 5 in particular is highly effective in reducing the disengaging torque.

According to the configuration set forth in claim 7, when switching the operating modes, the cams are rotated one by one, which enables a maximum possible reduction in the disengaging torque.

According to the configuration set forth in claim 8, the operating mode switch mechanism is configured to move the cam orientation changing parts in an axial direction. The cam orientation changing parts have an alignment pattern designed to include a section where two adjacent cam orientation changing parts have different axial distances from cams corresponding thereto. This allows the cams to be rotated at different timings when the operating modes of the cam clutch are switched. Thus this configuration effectively and reliably reduces the disengaging torque.

According to the configuration set forth in claims 9 and 10, the cam orientation changing parts are divided into two groups, and the orientation of the cams is changed stepwise group by group. This configuration thus enables quick mode switching with reduced disengaging torque without causing complexity. The configuration set forth in claim 10 in particular is highly effective in reducing the disengaging torque.

According to the configuration set forth in claim 11, when switching the operating modes, the cams are rotated one by one, which enables a maximum possible reduction in the disengaging torque.

According to the configuration set forth in claim 12, the operating mode switch mechanism is configured to move the cam orientation changing parts in a radial direction. The cam orientation changing parts have an alignment pattern designed to include a section where two adjacent cam orientation changing parts have different radial distances between a contact point between a cam pressing member and a cam corresponding thereto, and a contact point between a movable element and a control plate. This allows the cams to be rotated at different timings when the operating modes of the cam clutch are switched. Thus this configuration effectively and reliably reduces the disengaging torque.

According to the configuration set forth in claims 13 and 14, the cam orientation changing parts are divided into two groups, and the orientation of the cams is changed stepwise group by group. This configuration thus enables quick mode switching with reduced disengaging torque without causing complexity. The configuration set forth in claim 14 in particular is highly effective in reducing the disengaging torque.

According to the configuration set forth in claim 15, when switching the operating modes, the cams are rotated one by one, which enables a maximum possible reduction in the disengaging torque.

According to the configuration set forth in claim 16, it is possible to switch between four operating modes, i.e., a two-way free mode allowing rotation in both forward and reverse directions, one-way lock modes allowing rotation in either the forward direction or the reverse direction, and a two-way lock mode prohibiting rotation in both forward and reverse directions, by selectively changing the orientation of one or both of the first cams and second cams.

### [Brief Description of Drawings]

[Fig. 1] Fig. 1 is an exploded perspective view illustrating a configuration of a cam clutch according to a first embodiment of the present invention.
[Fig. 2] Fig. 2 is a radial cross-sectional view of the cam clutch shown in Fig. 1 in a plane perpendicular to the rotation axis of the cam clutch.
[Fig. 3] Fig. 3 is an axial cross-sectional view of the cam clutch shown in Fig. 1 in a plane containing the rotation axis of the cam clutch.
[Fig. 4] Fig. 4 is a perspective view illustrating a configuration of a cam in the cam clutch shown in Fig. 1.
[Fig. 5] Fig. 5 is a perspective view illustrating a configuration of a cage ring in the cam clutch shown in Fig. 1.
[Fig. 6] Fig. 6 is a radial partial cross-sectional view for explaining the relative positions of the cam orientation changing parts with respect to the cams.
[Fig. 7] Fig. 7 is a plan view illustrating a configuration of a switching member in the cam clutch shown in Fig. 1.
[Fig. 8] Fig. 8 is a schematic diagram illustrating the relative positions of the cam orientation changing parts with respect to the cams in the switching member shown in Fig. 7.
[Fig. 9] Fig. 9 is a schematic diagram for explaining the operation of the cam clutch shown in Fig. 1.
[Fig. 10] Fig. 10 is a radial partial cross-sectional view illustrating a schematic configuration of a cam clutch according to a second embodiment of the present invention.
[Fig. 11] Fig. 11 is a plan view illustrating a configuration of a switching member in the cam clutch shown in Fig. 10.
[Fig. 12] Fig. 12 is a schematic diagram illustrating the relative positions of the cam orientation changing parts with respect to the cams in the switching member shown in Fig. 11.
[Fig. 13] Fig. 13 is a schematic diagram for explaining the operation of the cam clutch shown in Fig. 10.
[Fig. 14] Fig. 14 is a radial partial cross-sectional view illustrating a schematic configuration of a cam clutch according to a third embodiment of the present invention.
[Fig. 15] Fig. 15 is a plan view illustrating a configuration of a switching member in the cam clutch shown in Fig. 14.
[Fig. 16] Fig. 16 is a schematic diagram illustrating the relative positions of the cam orientation changing parts with respect to the cams in the switching member shown in Fig. 15.
[Fig. 17] Fig. 17 is a schematic diagram for explaining the operation of the cam clutch shown in Fig. 14.
[Fig. 18] Fig. 18 is a radial partial cross-sectional view illustrating a configuration of a cam clutch according to a fourth embodiment of the present invention.
[Fig. 19] Fig. 19 is a perspective view illustrating a configuration of a switching member in the cam clutch shown in Fig. 18.
[Fig. 20] Fig. 20 is a schematic diagram illustrating the relative positions of the cam orientation changing parts with respect to the cams in the switching member shown in Fig. 19.
[Fig. 21] Fig. 21 is a schematic diagram for explaining the operation of the cam clutch shown in Fig. 18.
[Fig. 22A] Fig. 22A is a schematic diagram illustrating the relative positions of the cam orientation changing parts with respect to the cams in another example of the switching member that is part of the cam clutch according to the fourth embodiment.
[Fig. 22B] Fig. 22B is a schematic diagram illustrating the relative positions of the cam orientation changing parts with respect to the cams in yet another example of the switching member that is part of the cam clutch according to the fourth embodiment.
[Fig. 23] Fig. 23 is a radial partial cross-sectional view illustrating a configuration of a cam clutch according to a fifth embodiment of the present invention.
[Fig. 24] Fig. 24 is a rear view illustrating the configuration of the switching member in the cam clutch shown in Fig. 23, with the inner race, outer race, and cams.
[Fig. 25] Fig. 25 is a schematic diagram illustrating the relative positions of the cam orientation changing parts with respect to the cams in the switching member shown in Fig. 24.
[Fig. 26] Fig. 26 is a schematic diagram for explaining the operation of the cam clutch shown in Fig. 23.
[Fig. 27A] Fig. 27A is a schematic diagram illustrating the relative positions of the cam orientation changing parts with respect to the cams in another example of the switching member that is part of the cam clutch according to the fifth embodiment.
[Fig. 27B] Fig. 27B is a schematic diagram illustrating the relative positions of the cam orientation changing parts with respect to the cams in yet another example of the switching member that is part of the cam clutch according to the fifth embodiment.
[Fig. 28] Fig. 28 is an axial partial cross-sectional view illustrating a configuration of a cam clutch according to a sixth embodiment of the present invention in a plane containing the rotation axis.
[Fig. 29] Fig. 29 is a radial partial cross-sectional view illustrating a configuration of a cam clutch according to a seventh embodiment of the present invention in a plane perpendicular to the rotation axis.

### [Description of Embodiments]

Embodiments of the present invention will be described with reference to the drawings. Note, however, the present invention is not limited to these embodiments.

### Embodiment 1

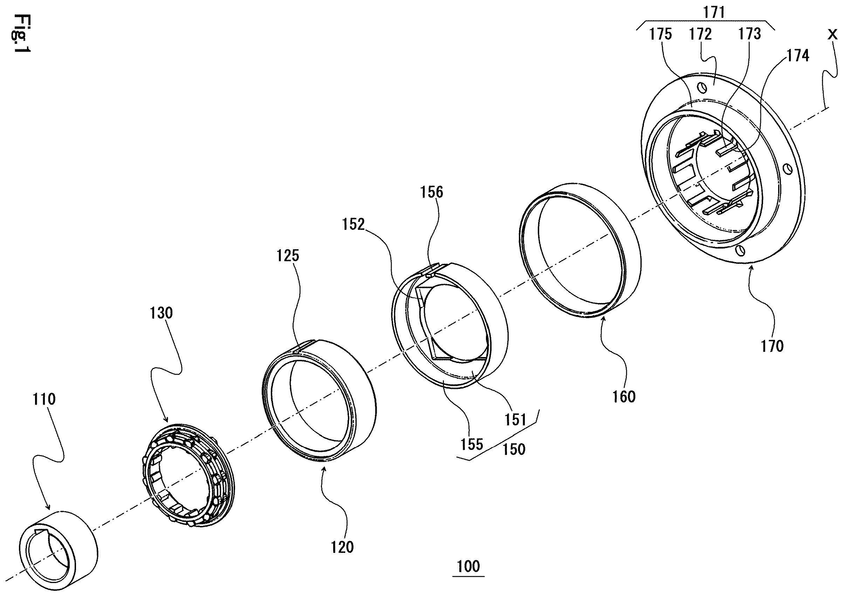

The cam clutch 100 according to a first embodiment of the present invention includes an inner race 110, an outer race 120, a cam mechanism 130, a cage rotation stopper 150, a coaxial alignment member 160, and an operating mode switch mechanism 170, as shown in Fig. 1.

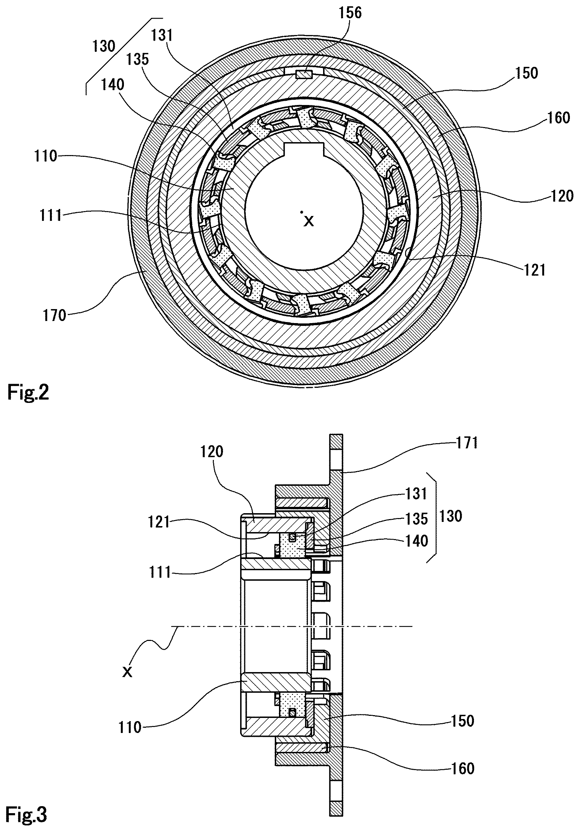

When the cam clutch 100 is assembled, the inner race 110 and outer race 120 are rotatable relative to each other about the same rotation axis X, with the raceway 111 of the inner race 110 and the raceway 121 of the outer race 120 facing each other, as shown in Fig. 2 and Fig. 3. The cam mechanism 130 is disposed between the raceway 111 of the inner race 110 and the raceway 121 of the outer race 120.

The cam mechanism 130 is made up of a plurality of cams 140 circumferentially distributed in a predetermined alignment pattern, a cage ring 135 holding each of the cams 140 on the same circumference, and a biasing means 131 that biases each of the cams 140 to make contact with the inner race 110 and the outer race 120. While the number of cams 140 in this embodiment is twelve, for example, the number of cams 140, or the shape and other features of the cams, are not particularly limited.

An annular garter spring, for example, is used as the biasing means 131 in this embodiment. However, the biasing means 131 may be any resilient member that can bias each of the cams 140 to make contact with the inner race 110 and outer race 120. A plurality of plate springs or torsion springs or the like may also be used.

The cams 140 are configured to make frictional engagement with the inner race 110 and outer race 120 when the inner race 110 rotates in one direction (counterclockwise in Fig. 2) relative to the outer race 120, for example, and to tilt in a direction in which the cams separate from the inner race 110 and outer race 120 when the inner race 110 rotates in the other direction (clockwise in Fig. 2) relative to the outer race 120.

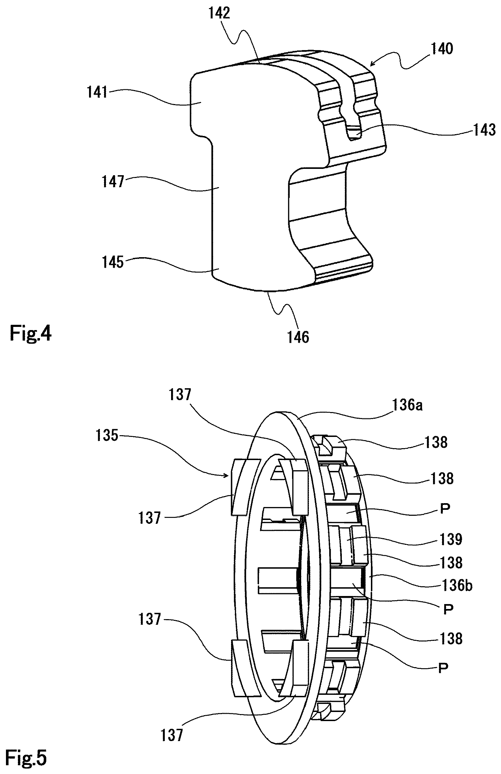

The cam 140 in this embodiment includes, as shown in Fig. 4, a head part 141 having a circumferential surface formed in an arcuate curved shape protruding radially outward and constituting a radially outer engagement surface 142 making contact with the outer race 120, a leg part 145 having a circumferential surface formed in an arcuate curved shape protruding radially inward and constituting a radially inner engagement surface 146 making contact with the inner race 110, and a support part 147 connecting the head part 141 and the leg part 145. The head part 141 extends out from the support part 147 in the circumferential direction.

The radially outer engagement surface 142 of the cam 140 is formed with a garter spring holding groove 143 in a central part in a direction perpendicular to the end face of the cam 140 (axial direction). The garter spring holding groove 143 is designed to impart a clockwise (in Fig. 2) rotational moment to the cam 140.

The cage ring 135 in this embodiment is configured to hold a plurality of cams 140 such that the cams 140 are arranged at circumferentially equal intervals.

The cage ring 135 includes, as shown in Fig. 5, a pair of annular plates 136a and 136b axially opposite each other, and a plurality of brace members 138 axially extending at circumferentially equally spaced positions and connecting the annular plates 136a and 136b, the spaces between adjacent brace members 138 forming pockets P. One annular plate 136a is designed to have larger outer dimensions than the other annular plate 136b to fit into a recess formed in one end face of the outer race 120.

Each of the brace members 138 protrudes radially outward more than the outer peripheral edge of the other annular plate 136b, and is formed with a circumferentially extending garter spring mount groove 139 in an outer circumferential surface thereof.

One annular plate 136a is formed with axially outwardly protruding engagement protrusions 137 on the outer surface.

The cams 140 are inserted into the pockets P from the leg part 145 such that the support parts 147 are positioned inside the pockets P. With the garter spring mounted, the cams are held on the cage ring 135. This restricts the circumferential positions of the cams 140, as well as the orientation of the cams 140, so that all the cams 140 are brought into contact with the inner race 110 and outer race 120 without variations in their orientation (inclination).

The cage rotation stopper 150 includes, as shown in Fig. 1, an annular plate part 151 that makes surface contact with one annular plate 136a of the cage ring 135 and restricts axial movements of the cam mechanism 130, and a circumferential wall part 155 fitted over the outer race 120 and axially extending from an outer peripheral edge on one side of the annular plate part 151.

Engagement recesses 152 are formed in the inner surface of the annular plate part 151, for the engagement protrusions 137 of the cage ring 135 to engage with. An engagement pawl 156 is formed on the circumferential wall part 155, to make sliding engagement with an axially extending recessed groove 125 formed on the outer circumferential surface of the outer race 120. This engagement stops the rotation of the cage ring 135 relative to the outer race 120.

The operating mode switch mechanism 170 of the cam clutch 100 in this embodiment is configured to switch the operating modes of the cam clutch 100 between a lock mode that prohibits relative rotation between the inner race 110 and outer race 120, and a free mode that allows relative rotation between the inner race 110 and outer race 120.

The operating mode switch mechanism 170 includes a switching member 171 that is rotatable independently of the rotation of the inner race 110 and the outer race 120.

The switching member 171 includes, as shown in Fig. 1, an annular plate-like end wall part 172, a plurality of cam orientation changing parts 173 integrally formed on one side of the end wall part 172 and each corresponding to each of the cams 140, and a circumferential wall part 175 that is positioned on the same rotation axis X as that of the inner race 110 and outer race 120 and extends axially from an outer peripheral edge on one side of the end wall part 172.

The circumferential wall part 175 of the switching member 171 is fitted over the cage rotation stopper 150 via the coaxial alignment member 160. The switching member 171 is rotated to move the cam orientation changing parts 173 in the circumferential direction to force the cams 140 to rotate.

The cam orientation changing parts 173 are formed as axially extending pieces for example, and each include a base portion axially extending from an inner peripheral edge on one side of the end wall part 172 at an angle toward one circumferential direction, and a cam pressing portion axially extending continuously from the distal end of the base portion.

The cam pressing portion has a cam pressing surface 174 that makes contact with the cam 140 and presses the cam 140 when the orientation of the cam is to be changed.

While the cam orientation changing parts 173 are integrally formed with the end wall part 172 in this embodiment, they may be provided separately from the end wall part 172, as long as they are able to force the cams 140 to rotate independently of the rotation of the inner race 110 and outer race 120.

The cam clutch 100 of this embodiment is designed such that at least one cam orientation changing part 173 has a different relative position with respect to the corresponding cam 140 from the relative positions of other cam orientation changing parts 173 with respect to their corresponding cams 140, so that the at least one cam orientation changing part 173 causes the cam 140 to rotate at a different timing from other cams 140.

As described above, the cams 140 are arranged at circumferentially equal intervals in this embodiment. Accordingly, the relative positions of the cam orientation changing parts 173 with respect to the cams 140 are tailored by adjusting the alignment pattern of the cam orientation changing parts 173. Namely, the relative positions are varied by changing the positions of the cam orientation changing parts 173 relative to the circumferentially equally spaced cams 140. Therefore, the disengaging torque can be reduced without compromising the torque transmission capacity of the cam clutch 100.

It is also possible to provide the cam orientation changing parts 173 in an alignment pattern in which they are arranged at circumferentially equal intervals. In this case, the relative positions of the cam orientation changing parts 173 with respect to the cams 140 may be tailored by adjusting the alignment pattern of the cams 140.

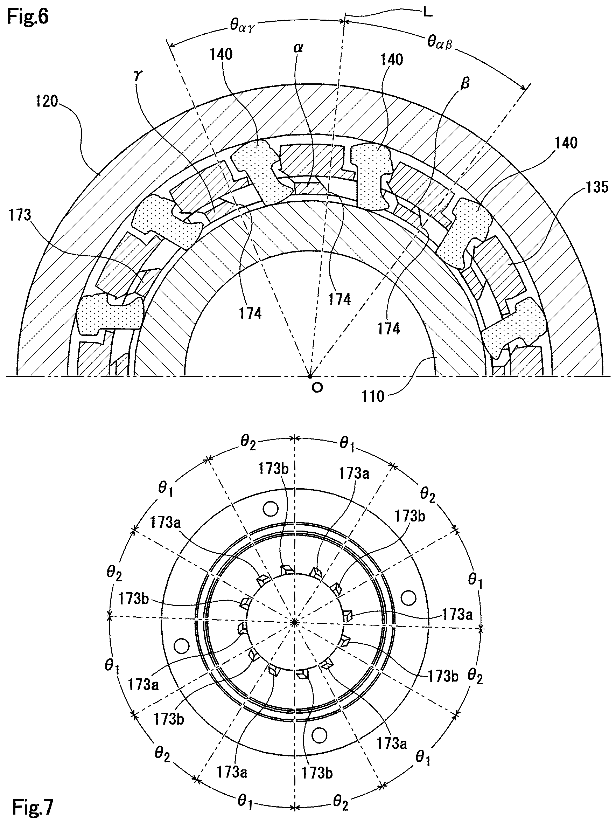

The relative positions of the cam orientation changing parts 173 with respect to the cams 140 are described in more specific terms. As shown in Fig. 6, the cam orientation changing parts 173 are positioned in a certain alignment pattern in a cross section perpendicular to the rotation axis O, in which α denotes a reference cam orientation changing part and L represents a reference line L that connects the position of the reference cam orientation changing part α and the rotation axis O. In this alignment pattern, there are sections where the position angle θαβ of one-side cam orientation changing part β, which is adjacent the reference cam orientation changing part α on one circumferential side, relative to the reference line L is different from the other-side position angle θαγ of the cam orientation changing part γ, which is adjacent the reference cam orientation changing part α on the other circumferential side, relative to the reference line L. The position of the cam orientation changing part 173 here refers to the circumferential position of the cam pressing surface 174.

In the cam clutch 100 of this embodiment, the cam orientation changing parts 173 are divided into two groups. The cam orientation changing parts 173 of each group have the same relative position with respect to the corresponding cams 140 so as to rotate the cams 140 at the same timing.

Specifically, as shown in Fig. 7, the cam orientation changing parts 173 have an alignment pattern in which sections with a first position angle θ1 and sections with a second position angle θ2 alternate each other. The first position angle θ1 is the angle between the cam orientation changing parts 173a of the first group, which rotate the cams 140 at an earlier timing in the operation of changing the orientation of the cams, and the cam orientation changing parts 173b of the second group, which each adjoin the cam orientation changing parts 173a on the other circumferential side and which rotate the cams at a different timing from that of the first group. The second position angle θ2 is the angle between the cam orientation changing parts 173a of the first group and the cam orientation changing parts 173b of the second group adjoining the cam orientation changing parts 173a on one circumferential side.

While the cam orientation changing parts 173 in this embodiment are divided into two groups, they may be divided into three or more groups.

Although the sizes of the first position angle θ1 and the second angle θ2 are not particularly limited, the first position angle θ1 is 31.5°, for example, and the second angle θ2 is 28.5°, for example.

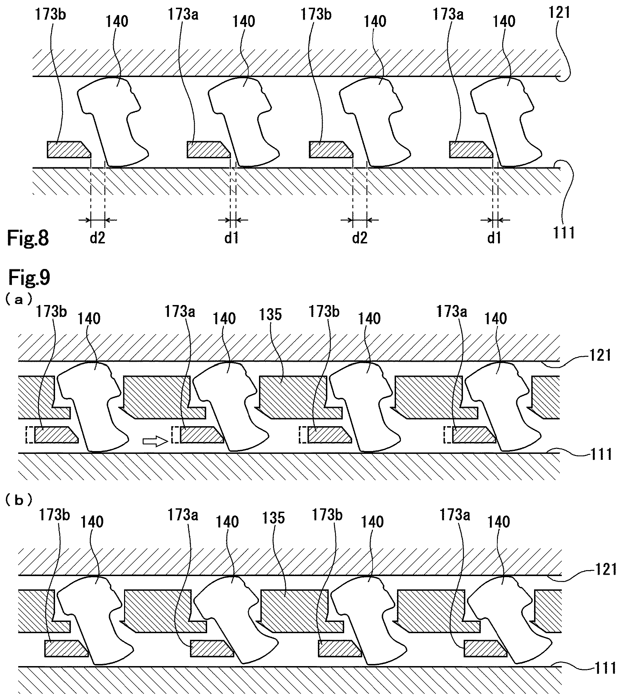

This alignment pattern of the cam orientation changing parts 173 translates as a difference between the distance d1 in the circumferential direction (moving direction of the cam orientation changing part 173a) between the cam orientation changing parts 173a of the first group and the corresponding cams 140, and the distance d2 in the circumferential direction (moving direction of the cam orientation changing part 173b) between the cam orientation changing parts 173b of the second group and the corresponding cams 140 as shown in Fig. 8, causing the cam orientation changing parts 173a and 173b to make contact with the cams 140 at different timings. Namely, when switching the operating modes of the cam clutch 100, the change in the cam orientation for the cams 140 is implemented at timings different between a first group and a second group of the cams. This allows for reduction of the disengaging torque as well as smooth mode switching. Specifically, dividing the cam orientation changing parts 173 in two groups and changing the orientation of the cams 140 stepwise group by group enables quick mode switching with reduced disengaging torque without causing complexity.

For convenience of explanation, Fig. 8 illustrates the raceway 111 of the inner race 110 and the raceway 121 of the outer race 120 as parallel flat surfaces. The relative positional relationship between the cams 140 and the cam orientation changing parts 173 is illustrated in an exaggerated manner for easier understanding.

Hereinafter, the operation of the cam clutch 100 according to the above first embodiment will be described with reference to Fig. 9. Similarly to Fig. 8, Fig. 9 illustrates the raceway 111 of the inner race 110 and the raceway 121 of the outer race 120 as parallel flat surfaces for convenience of explanation. The relative positional relationship between the cams 140 and the cam orientation changing parts 173 is illustrated in an exaggerated manner for easier understanding.

Note, first, that, when the cam orientation changing parts 173a and 173b are at positions where they do not touch the cams 140 and do not restrict the orientation of the cams 140 (see Fig. 8), the cam clutch 100 is in the one-way lock mode that prohibits rotation of the inner race 110 relative to the outer race 120 in one direction (counterclockwise in Fig. 2). That is, all the cams 140 are maintained in the standby state where they can immediately start wedging against the inner race 110 and outer race 120 upon application of torque on either the inner race 110 or the outer race 120. When the inner race 110 is rotated in one direction, for example, the cams 140 rotate or tilt in the engaging direction, and wedge against the inner race 110 and outer race 120. When the torque is removed from the inner race 110, the cams 140 rotate or tilt in the disengaging direction, and return to the standby position. When the inner race 110 is rotated in the other direction, the inner race 110 freewheels.

When the switching member 171 is rotated in the other direction (clockwise in Fig. 2) manually or by a suitable drive source, the cam orientation changing parts 173a of the first group press their corresponding cams 140, so that some of the cams 140 are rotated in advance to tilt in the disengaging direction, as shown in Fig. 9(a).

Next, the cam orientation changing parts 173b of the second group press their corresponding cams 140, so that all the other cams 140 are rotated to tilt in the disengaging direction, as shown in Fig. 9(b). This restricts the orientation of all the cams 140 out of contact with the inner race 110 and outer race 120, and thus the operating mode of the cam clutch 100 is switched from the one-way lock mode to the free mode that allows rotation of the inner race 110 relative to the outer race 120 in both directions.

The cam clutch 100 according to the above first embodiment allows for easy switching of the operating modes of the cam clutch 100 because the cams 140 can be rotated in a predetermined direction by circumferentially moving the cam orientation changing parts 173, which is achieved basically only by rotating the switching member 171. That some of the cam orientation changing parts 173 have a different relative position with respect to the cams 140 means that the number of cams 140 rotated at the same timing when the operating modes of the cam clutch 100 are switched is reduced. Therefore, the disengaging torque required for disengaging the cams 140 under a torque load can be reduced.

This in turn obviates the necessity for making the cam orientation changing parts 173 of a high-rigidity material, or increasing their size. Nor is it necessary to use a large-size drive source for the operating mode switch mechanism. Thus this cam clutch 100 not only achieves high responsiveness but also allows for energy saving and size reduction. Moreover, the service life can be prolonged, as the engaging surfaces of the cams 140, the raceway 111 of the inner race 110, the raceway 121 of the outer race 120, and the cam orientation changing parts 173 are less likely to suffer damage.

### Embodiment 2

The cam clutch according to a second embodiment of the present invention has substantially the same configuration as the cam clutch 100 according to the first embodiment described above except for differences in the configuration of the switching member in the operating mode switch mechanism.

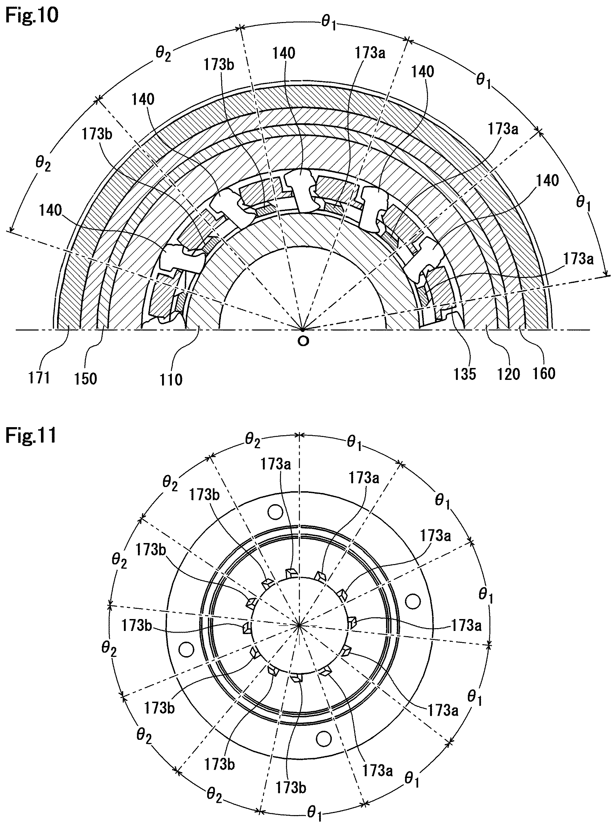

The switching member 171 according to this embodiment has two groups of cam orientation changing parts 173a and 173b. The cam orientation changing parts of each group have the same relative position with respect to the corresponding cams 140 so as to rotate the cams 140 at the same timing, as shown in Fig. 10 and Fig. 11.

Specifically, the cam orientation changing parts 173 have an alignment pattern that includes a section where the cam orientation changing parts 173a of the first group, which rotate their cams 140 at an earlier timing in the operation of changing the orientation of the cams, are arranged in succession with a first position angle θ1, and a section where the cam orientation changing parts 173b of the second group, which rotate their cams 140 at a different timing from that of the first group, are arranged in succession with a second position angle θ2.

In this embodiment, too, the cam orientation changing parts 173 may be divided into three or more groups.

Although the sizes of the first position angle θ1 and the second angle θ2 not particularly limited, the first position angle θ1 is 31.5°, for example, and the second angle θ2 is 28.5°, for example.

In this embodiment, the cam orientation changing parts 173 have an alignment pattern that includes one each section, where the cam orientation changing parts 173a of the first group are arranged with a first position angle θ1, and where the cam orientation changing parts 173b of the second group are arranged with a second position angle θ2. Instead, the alignment pattern may include a plurality of one or both of the section where the cam orientation changing parts 173a of the first group are arranged with a first position angle θ1, and the section where the cam orientation changing parts 173b of the second group are arranged with a second position angle θ2.

The number of cam orientation changing parts belonging to each group may be the same, or different.

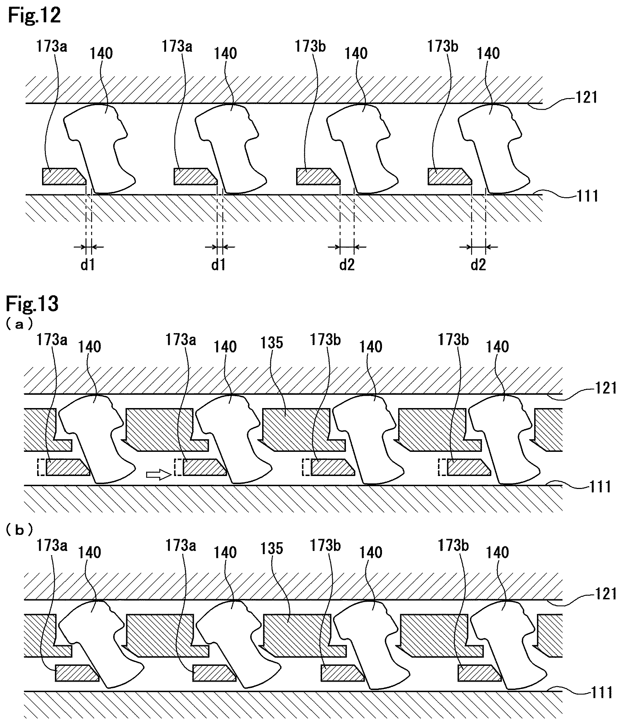

In this cam clutch according to this embodiment, too, the distance d1 in the circumferential direction (moving direction of the cam orientation changing part 173a) between the cam orientation changing parts 173a of the first group and the corresponding cams 140, is different from the distance d2 in the circumferential direction (moving direction of the cam orientation changing part 173b) between the cam orientation changing parts 173b of the second group and the corresponding cams 140, as shown in Fig. 12, causing the cam orientation changing parts 173a and 173b to make contact with the cams 140 at different timings. Namely, when switching the operating modes of the cam clutch 100, the change in the cam orientation for the cam 140 is implemented at timings different between a first group and a second group of the cams. This allows for reduction of the disengaging torque as well as smooth mode switching.

The operation of the cam clutch according to this embodiment will be described with reference to Fig. 13. For convenience of explanation, Fig. 13 illustrates the raceway 111 of the inner race 110 and the raceway 121 of the outer race 120 as parallel flat surfaces. The relative positional relationship between the cams 140 and the cam orientation changing parts 173 is illustrated in an exaggerated manner for easier understanding.

Note, first, that, when the cam orientation changing parts 173a and 173b are at positions where they do not touch the cams 140 and do not restrict the orientation of the cams 140 (see Fig. 12), the cam clutch is in the one-way lock mode that prohibits rotation of the inner race 110 relative to the outer race 120 in one direction (counterclockwise in Fig. 10).

When the switching member 171 is rotated in the other direction (clockwise in Fig. 10) manually or by a suitable drive source, the cam orientation changing parts 173a of the first group press their corresponding cams 140, so that some of the cams 140 are rotated in advance to tilt in the disengaging direction, as shown in Fig. 13(a).

Next, the cam orientation changing parts 173b of the second group press their corresponding cams 140, so that all the other cams 140 are rotated to tilt in the disengaging direction, as shown in Fig. 13(b). This restricts the orientation of all the cams 140 out of contact with the inner race 110 and outer race 120, and thus the operating mode of the cam clutch 100 is switched from the one-way lock mode to the free mode that allows rotation of the inner race 110 relative to the outer race 120 in both directions.

In the cam clutch according to the above second embodiment, too, the cam orientation changing parts include the cam orientation changing parts 173a or 173b that have a different relative position with respect to the cams 140, so that the number of cams 140 rotated at the same timing when the operating modes of the cam clutch are switched is reduced. Therefore, the disengaging torque required for disengaging the cams 140 under a torque load can be reduced.

### Embodiment 3

The cam clutch according to a third embodiment of the present invention has substantially the same configuration as the cam clutch 100 according to the first embodiment described above except for differences in the configuration of the switching member in the operating mode switch mechanism.

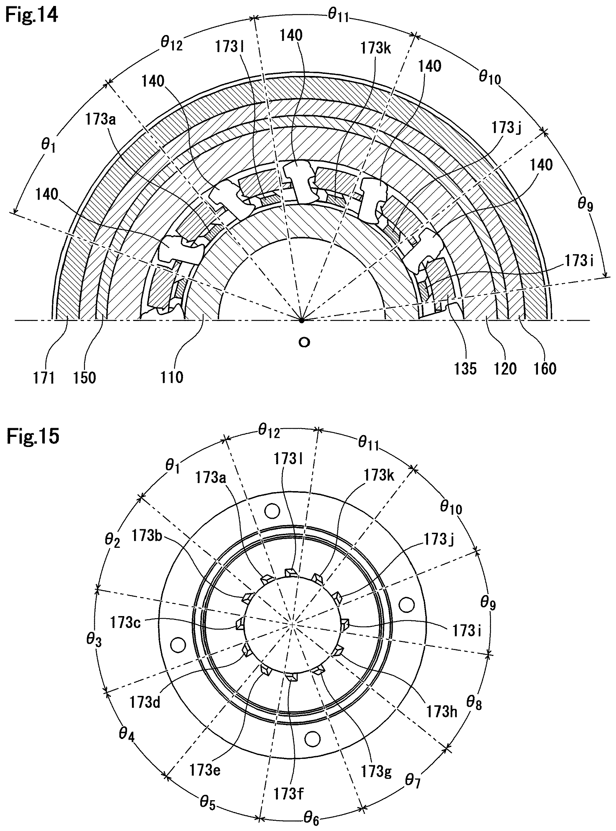

The switching member 171 according to this embodiment has multiple groups of cam orientation changing parts 173a to 173l. The cam orientation changing parts of each group have the same relative position with their corresponding cams 140 so as to rotate the cams 140 at the same timing, as shown in Fig. 14 and Fig. 15.

Specifically, the cam orientation changing parts 173 have an alignment pattern in which the position angles θ1 to θ12 between two adjacent cam orientation changing parts 173 are different from each other. In this embodiment, the cam orientation changing parts 173 have an alignment pattern in which the position angle increases sequentially by a constant increment in the other circumferential direction. To give an example, the first position angle θ1 is 30.00°, for example, and the n-th position angle θn (where n is an integer from 2 to 11) is larger than the (n-1)th position angle θn-1 by 0.05°, for example. The twelfth position angle θ12 is 27.25°, for example. The position angles θ1 to θ12 are not limited to particular angles, and the increment of the position angles may be varied. The alignment pattern of the cam orientation changing parts 173 does not require a sequential increase in the position angle. The pattern may be designed such that the position angle changes irregularly.

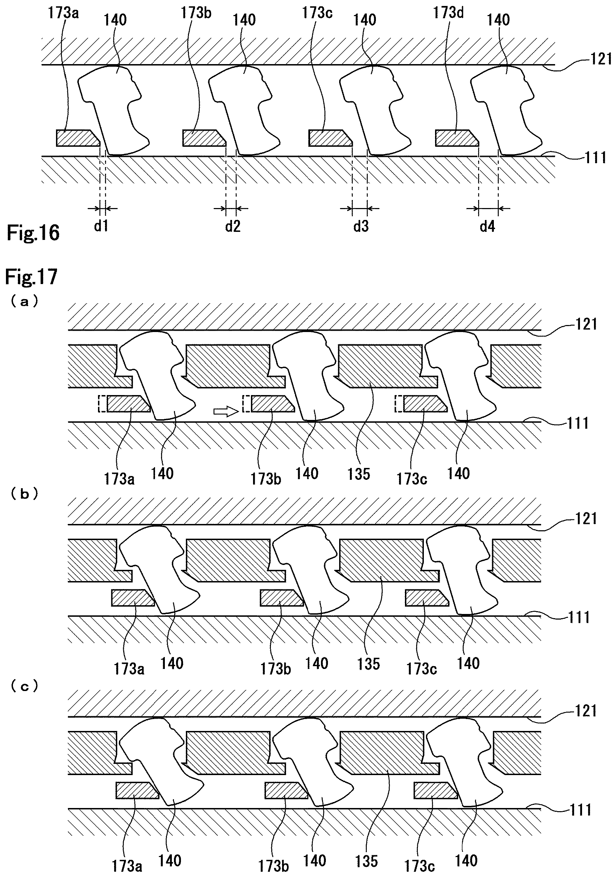

In this cam clutch according to this embodiment, too, the distances dn (where n is an integer from 1 to 12) in the circumferential direction (moving direction of the cam orientation changing part) between the respective n-th group cam orientation changing parts 173n (where n is an integer from 1 to 12) and the corresponding cams 140 are different from each other as shown in Fig. 16 (for convenience of illustration, Fig. 16 shows the relative positions of only four cam orientation changing parts 173a to 173d with respect to the cams).

Therefore, the cam orientation changing parts 173a to 173l come into contact with the cams 140 at different timings. Namely, when switching the operating modes of the cam clutch 100, the orientation of the cams 140 is changed group by group at different timings, such as to rotate the cams 140 one by one. This allows for a maximum possible reduction in the disengaging torque.

The operation of the cam clutch according to this embodiment will be described with reference to Fig. 17. For convenience of explanation, Fig. 17 illustrates the raceway 111 of the inner race 110 and the raceway 121 of the outer race 120 as parallel flat surfaces. The relative positional relationship between the cams 140 and the cam orientation changing parts 173 is illustrated in an exaggerated manner for easier understanding.

Note, first, that, when the cam orientation changing parts 173a, 173b, and 173c are at positions where they do not touch the cams 140 and do not restrict the orientation of the cams 140 (see Fig. 16), the cam clutch is in the one-way lock mode that prohibits rotation of the inner race 110 relative to the outer race 120 in one direction (counterclockwise in Fig. 14).

When the switching member 171 is rotated in the other direction (clockwise in Fig. 14) manually or by a suitable drive source, the cam orientation changing part 173a of the first group presses the corresponding cam 140, so that one cam 140 is rotated in advance to tilt in the disengaging direction, as shown in Fig. 17(a).

Next, the cam orientation changing part 173b of the second group adjacent the cam orientation changing part 173a of the first group presses the corresponding cam 140, so that the second cam 140 is rotated to tilt in the disengaging direction, as shown in Fig. 17(b).

Similarly, the cam orientation changing part 173c of the third group adjacent the cam orientation changing part 173b of the second group presses the corresponding cam 140, so that the third cam 140 is rotated to tilt in the disengaging direction, as shown in Fig. 17(c).

The orientation of the cams is changed stepwise in this manner for each of multiple groups, eventually restricting the orientation of all the cams 140 out of contact with the inner race 110 and outer race 120. Thus the operating mode of the cam clutch 100 is switched from the one-way lock mode to the free mode that allows rotation of the inner race 110 relative to the outer race 120 in both directions.

### Embodiment 4

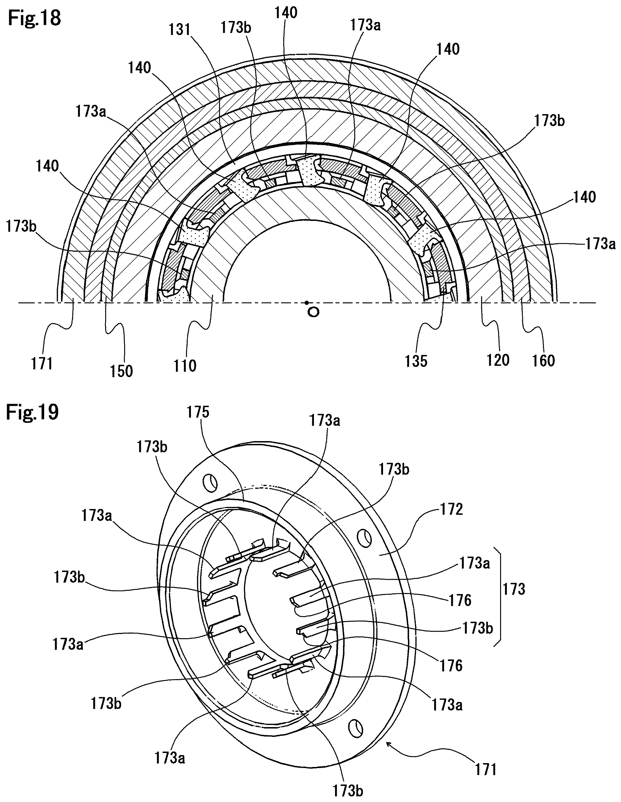

The cam clutch according to a fourth embodiment of the present invention has substantially the same configuration as the cam clutch 100 according to the first embodiment described above as shown in Fig. 18 and Fig. 19, except for differences in the configuration of the switching member 171 in the operating mode switch mechanism.

The switching member 171 according to this embodiment is configured to move the cam orientation changing parts 173 in an axial direction to force the cams 140 to rotate independently of the rotation of the inner race 110 and outer race 120.

The switching member 171 includes an annular plate-like end wall part 172, a plurality of cam orientation changing parts 173 integrally formed on one side of the end wall part 172, each corresponding to each of the plurality of cams 140, and a circumferential wall part 175 that has the same rotation axis O with the inner race 110 and outer race 120 and extends axially from outer peripheral edges of both sides of the end wall part 172.

The cam orientation changing parts 173 each have a tapered portion 176 at the distal end on a side facing the corresponding cam, decreasing in width toward the front in the moving direction of the switching member. The side face of the tapered portion 176 forms the cam pressing surface.

The cam orientation changing parts 173 are arranged at circumferentially equal intervals, and divided into two groups, and the cam orientation changing parts of each of the groups have the same relative position with respect to the corresponding cams 140 so as to rotate the cams 140 at the same timing.

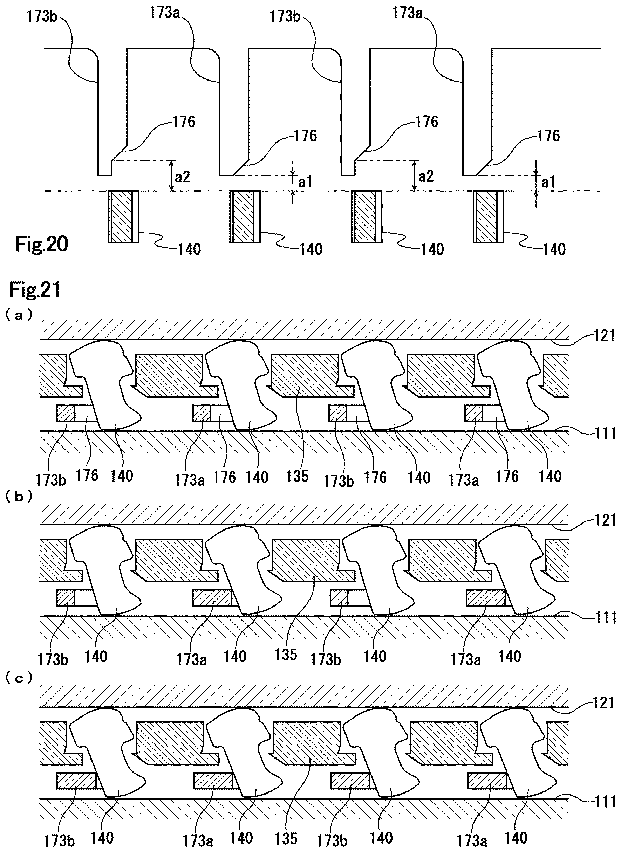

Specifically, the cam orientation changing parts 173 include a first group of cam orientation changing parts 173a, with the tapered portion 176 starting from the distal end face, and a second group of cam orientation changing parts 173b, with the tapered portion 176 starting from a point more to the rear in the moving direction of the switching member than the distal end, as shown in Fig. 20. The cam orientation changing parts 173a of the first group and the cam orientation changing parts 173b of the second group have different relative positions with respect to their corresponding cams 140 from each other.

Namely, the distance a1 in the axial direction (moving direction of the cam orientation changing part 173a) between the cam orientation changing parts 173a of the first group and the corresponding cams 140, is different from the distance a2 in the axial direction (moving direction of the cam orientation changing part 173b) between the cam orientation changing parts 173b of the second group and the corresponding cams 140, causing the cam orientation changing parts 173a and 173b to make contact with the cams 140 at different timings. Namely, when switching the operating modes of the cam clutch, the change in the cam orientation for the cams 140 is implemented at timing different between a first group and a second group of the cams. This allows for reduction of the disengaging torque as well as smooth mode switching.

In the switching member 171 according to this embodiment, the cam orientation changing parts 173 have an alignment pattern in which the cam orientation changing parts 173a of the first group having a first axial distance a1 to their cams, and the cam orientation changing parts 173b of the second group having a second axial distance a2 to their cams, circumferentially alternate each other.

The operation of the cam clutch according to this embodiment will be described with reference to Fig. 21. For convenience of explanation, Fig. 21 illustrates the raceway 111 of the inner race 110 and the raceway 121 of the outer race 120 as parallel flat surfaces. The relative positional relationship between the cams 140 and the cam orientation changing parts 173 is illustrated in an exaggerated manner for easier understanding.

Note, first, that, when the cam orientation changing parts 173a and 173b are at positions where they do not touch the cams 140 and do not restrict the orientation of the cams 140 as shown in Fig. 21(a), the cam clutch is in the one-way lock mode that prohibits rotation of the inner race 110 relative to the outer race 120 in one direction (counterclockwise in Fig. 18).

When the switching member 171 is moved in the axial direction manually or by a suitable drive source, the cam orientation changing parts 173a of the first group press their corresponding cams 140, so that some of the cams 140 are rotated in advance to tilt in the disengaging direction by the action of the tapered portions 176, as shown in Fig. 21(b).

Next, the cam orientation changing parts 173b of the second group press their corresponding cams 140, so that all the other cams 140 are rotated to tilt in the disengaging direction by the action of the tapered portions 176, as shown in Fig. 21(c). This restricts the orientation of all the cams 140 out of contact with the inner race 110 and outer race 120, and thus the operating mode of the cam clutch is switched from the one-way lock mode to the free mode that allows rotation of the inner race 110 relative to the outer race 120 in both directions.

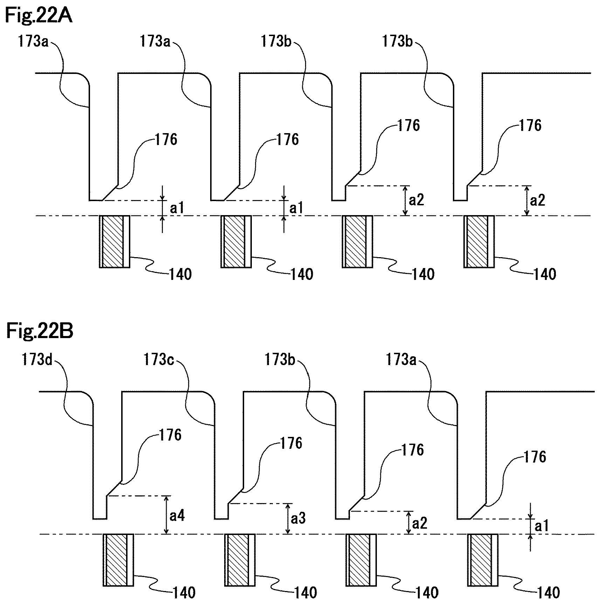

In the embodiment described above, the cam orientation changing parts 173 have an alignment pattern in which the cam orientation changing parts 173a of the first group and the cam orientation changing parts 173b of the second group circumferentially alternate each other. This is not intended to limit the alignment pattern of the cam orientation changing parts 173 to a particular type. The cam orientation changing parts 173 may have an alignment pattern that includes a section where the cam orientation changing parts 173a of the first group are arranged in succession, and a section where the cam orientation changing parts 173b of the second group are arranged in succession, as shown in Fig. 22A, for example. Moreover, the cam orientation changing parts 173 may have an alignment pattern that includes a plurality of one or more of the section where the cam orientation changing parts 173a of the first group are arranged in succession and the section where the cam orientation changing parts 173b of the second group are arranged in succession.

Moreover, the cam orientation changing parts 173 may be divided into three or more groups. For example, the cam orientation changing parts 173 may have the tapered portions 176 formed at different positions from each other as shown in Fig. 22B (which shows in in Fig. 22B the relative positions of only four cam orientation changing parts 173a to 173d with respect to the cams), and may be arranged in an alignment pattern in which the distance a1 to a4 between the tapered portion 176 and the cam increases sequentially in the other circumferential direction, for example. In such a configuration, the cam orientation changing parts may have an alignment pattern in which the distance between the tapered portion 176 and the cam varies irregularly.

In the cam clutch according to the above fourth embodiment, too, some of the cam orientation changing parts 173 have a different relative position with respect to the cams 140, so that the number of cams 140 rotated at the same timing when the operating modes of the cam clutch are switched is reduced. Therefore, the disengaging torque required for disengaging the cams 140 under a torque load can be reduced.

### Embodiment 5

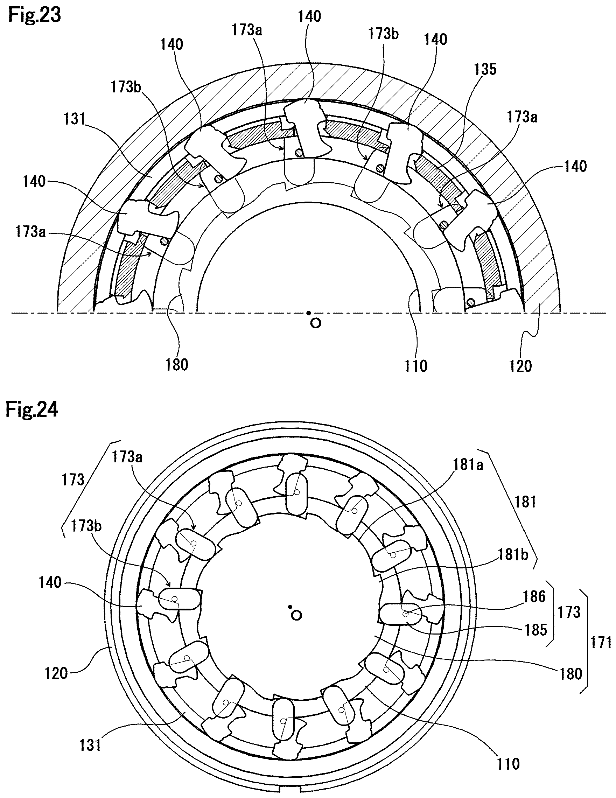

The cam clutch according to a fifth embodiment of the present invention has substantially the same configuration as the cam clutch 100 according to the first embodiment described above as shown in Fig. 23 except for differences in the configuration of the switching member 171 in the operating mode switch mechanism.

The switching member 171 according to this embodiment is configured to move the cam orientation changing parts 173 in a radial direction to force the cams 140 to rotate independently of the rotation of the inner race 110 and outer race 120.

The switching member 171 includes, as shown in Fig. 24, a plurality of cam orientation changing parts 173 each corresponding to each of the cams 140, and a control plate 180 rotatable about the rotation axis O in one direction (clockwise in Fig. 24) to move each of the cam orientation changing parts 173 in a radial direction.

The cam orientation changing part 173 is made up of a movable element 185 that has an elliptical shape in plan view, for example, and an axially extending rod-like cam pressing member 186 fixed to the movable element 185. The movable element 185 and the cam pressing member 186 may be integrally formed, or may be separate parts.

The control plate 180 has a circular disc-shaped base part, with a plurality of teeth 181 on the circumferential surface, and is designed to be rotated manually or by a suitable drive source within a predetermined angle range, to move the cam orientation changing parts 173 in the radial direction.

The teeth 181 are formed on the circumferential surface, one tooth each in each of circumferentially equally divided regions corresponding to the cam orientation changing parts 173, such that the distance from the rotation axis O to the circumferential surface increases gradually. The teeth 181 have an inclined surface, which is a circular arc surface, for example.

The cam orientation changing parts 173 are divided into two groups and the cam orientation changing parts of each of the groups have the same relative position with respect to the corresponding cams 140 so as to rotate the cams 140 at the same timing.

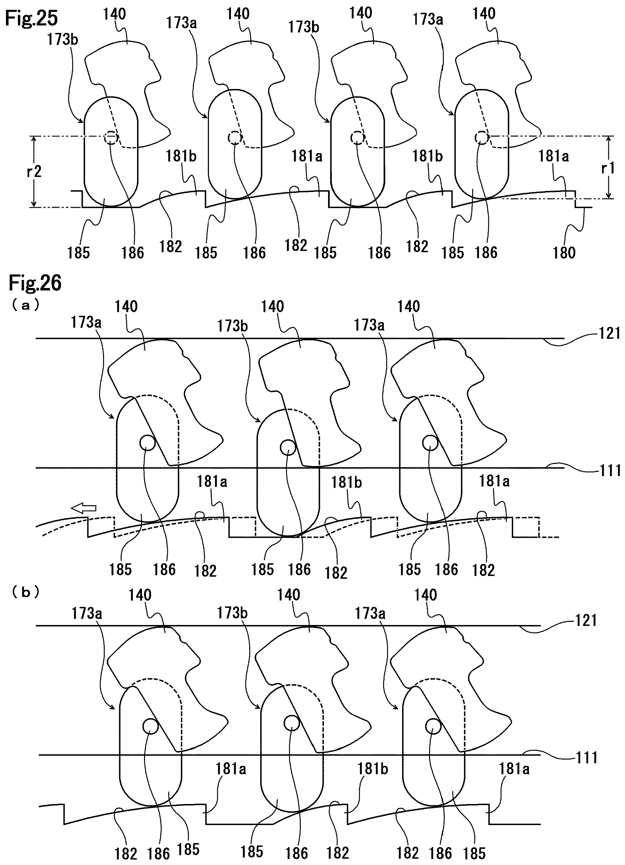

Specifically, as shown in Fig. 25, the teeth 181 of the control plate 180 include first teeth 181a having a circular arc inclined surface 182 with a first radius of curvature, and second teeth 181b having a circular arc inclined surface 182 with a second radius of curvature that is smaller than the first radius of curvature. The first teeth 181a and the second teeth 181b circumferentially alternate each other. The cam orientation changing parts 173 are arranged at circumferentially equal intervals, for example. The cam orientation changing parts 173a of the first group corresponding to the first teeth 181a are positioned on the inclined surfaces 182 of the first teeth 181a, while the cam orientation changing parts 173b of the second group corresponding to the second teeth 181b are positioned on the circumferential surface of the base part. The cam pressing members 186 provided to the cam orientation changing parts 173a and 173b are positioned on the same circumference.

Namely, the distance r1 between the contact point of the cam pressing member 186 of cam orientation changing parts 173a of the first group on the cam 140, and the contact point of the movable element 185 on the control plate 180, is different from the distance r2 between the contact point of the cam pressing member 186 of the cam orientation changing parts 173b of the second group on the cam 140, and the contact point of the movable element 185 on the control plate 180. Namely, when switching the operating modes of the cam clutch, the change in the cam orientation for the cams 140 is implemented at timings different between a first group and a second group of the cams. This allows for reduction of the disengaging torque as well as smooth mode switching.

In the switching member 171 according to this embodiment, the cam orientation changing parts 173 have an alignment pattern in which the cam orientation changing parts 173a of the first group and the cam orientation changing parts 173b of the second group circumferentially alternate each other, the cam orientation changing parts 173a of the first group having a first radial distance r1 between the contact point of the cam pressing member on the cam and the contact point of the movable element on the control plate, and the cam orientation changing parts 173b of the second group having a second radial distance r2.

The operation of the cam clutch according to this embodiment will be described with reference to Fig. 26. For convenience of explanation, Fig. 26 illustrates the raceway 111 of the inner race 110 and the raceway 121 of the outer race 120 as parallel flat surfaces. The relative positional relationship between the cams 140 and the cam orientation changing parts 173 is illustrated in an exaggerated manner for easier understanding.

Note, first, that, when the cam orientation changing parts 173a and 173b are at positions where they do not touch the cams 140 and do not restrict the orientation of the cams 140, the cam clutch is in the one-way lock mode that prohibits rotation of the inner race 110 relative to the outer race 120 in one direction (counterclockwise in Fig. 23).

When the switching member 171 is rotated in one direction (counterclockwise in Fig. 23) manually or by a suitable drive source, the cam orientation changing parts 173a of the first group move radially outwards by the action of the inclined surface 182 of the first teeth 181a on the control plate 180, as shown in Fig. 26(a). This causes the cam pressing members 186 to press their corresponding cams 140, so that some of the cams 140 are rotated in advance to tilt in the disengaging direction.

Next, the cam orientation changing parts 173b of the second group move radially outwards by the action of the inclined surface 182 of the second teeth 181b on the control plate 180, as shown in Fig. 26(b). This causes the cam pressing members 186 to press their corresponding cams 140, so that all the other cams 140 are rotated to tilt in the disengaging direction. This restricts the orientation of all the cams 140 out of contact with the inner race 110 and outer race 120, and thus the operating mode of the cam clutch is switched from the one-way lock mode to the free mode that allows rotation of the inner race 110 relative to the outer race 120 in both directions.

In the embodiment described above, the cam orientation changing parts 173 have an alignment pattern in which the cam orientation changing parts 173a of the first group and the cam orientation changing parts 173b of the second group circumferentially alternate each other. This is not intended to limit the alignment pattern of the cam orientation changing parts 173 to a particular type.

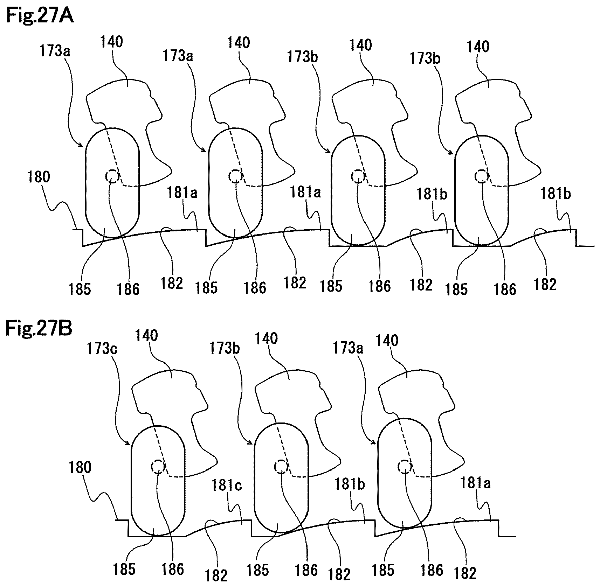

The cam orientation changing parts 173 may have an alignment pattern that includes a section where the cam orientation changing parts 173a of the first group are arranged in succession, and a section where the cam orientation changing parts 173b of the second group are arranged in succession, as shown in Fig. 27A, for example. Namely, the control plate 180 may be designed to include a section where the first teeth 181a are arranged in succession, and a section where the second teeth 181b are arranged in succession.

Moreover, the cam orientation changing parts 173 may have an alignment pattern that includes a plurality of one or more of the section where the cam orientation changing parts 173a of the first group are arranged in succession, and the section where the cam orientation changing parts 173b of the second group are arranged in succession.

The cam orientation changing parts 173 may be divided into three or more groups. For example, the control plate 180 may be formed with first teeth 181a, second teeth 181b, and third teeth 181c, each having a circular arc inclined surface 182 with different radii of curvature as shown in Fig. 27B (which shows in Fig. 27B only three teeth), to cause the cams 140 to rotate group by group at different timings. In this example, the teeth are arranged in a regular pattern in which the radius of curvature of the inclined surface 182 decreases sequentially in the circumferential direction. Instead, the teeth may be arranged in a pattern in which the radius of curvature of the inclined surface varies irregularly.

Furthermore, the control plate may have multiple teeth having a circular arc inclined surface with the same radius of curvature, and the teeth may be arranged at phase positions in the rotation direction shifted from each other by a predetermined angle. This way, too, the cams 140 can be rotated group by group at different timings.

Alternatively, the teeth on the control plate may all have a circular arc inclined surface with the same radius of curvature, and the relative positions of the cams 140 with respect to the cam orientation changing parts 173 may be tailored by adjusting the positions of the cam pressing members 186 of the movable elements 185.

In the cam clutch according to the above fifth embodiment, too, some of the cam orientation changing parts 173 have a different relative position with respect to the cams 140, so that the number of cams 140 rotated at the same timing when the operating modes of the cam clutch are switched is reduced. Therefore, the disengaging torque required for disengaging the cams 140 under a torque load can be reduced.

While the inner race 110 is used as the input-side rotating member in the configurations of the cam clutches according to the first to fifth embodiments described above, the cam clutch can be designed to use the outer race 120 as the input-side rotating member.

Moreover, while all the cam clutches according to the embodiments described above are designed to use the cams configured to receive a rotational moment applied by the biasing means in the same direction, the cam clutch can be designed to use two types of cams configured to receive a rotational moment in different directions. In this case, the cam clutch can be switched between three operating modes, the two-way lock mode, one-way lock mode, and two-way free mode.

In such a configuration, the arrangement of the first-type and second-type cams is not limited to a particular layout. The first-type and second-type cams may be aligned on the same circumference, or a plurality of rows of a plurality of cams aligned on the same circumference may be arranged side by side in the axial direction.

In a configuration provided with a plurality of rows of cams, each row of cams may include only one of the first-type and second-type cams, or, may include both of the first-type and second-type cams.

The numbers of the first-type cams and second-type cams may be the same, or different.

In cases where the first-type cams and second-type cams are aligned on the same circumference, the first-type and second-type cams may be circumferentially alternately arranged, or, the first-type and second-type cams may not be alternately arranged.

### Embodiment 6

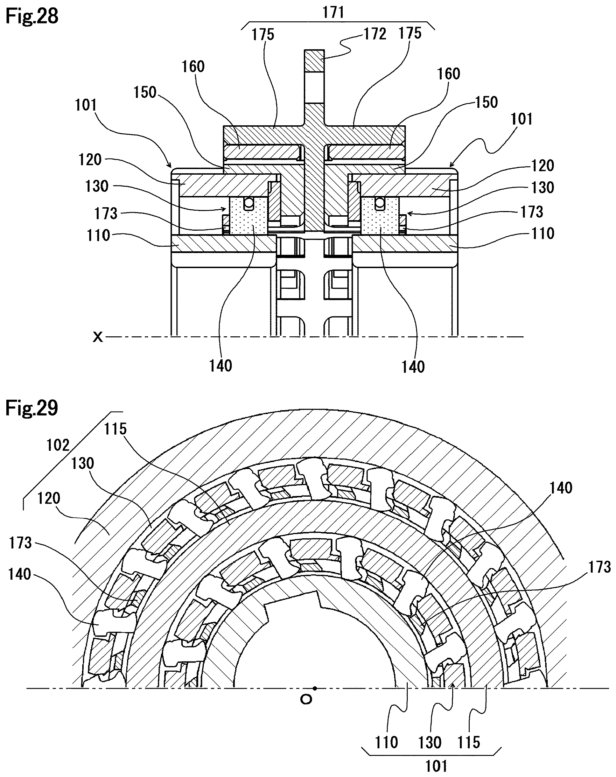

Fig. 28 is an axial partial cross-sectional view illustrating a configuration of a cam clutch according to a sixth embodiment of the present invention in a plane containing the rotation axis.

This cam clutch has clutch mechanisms 101 configured the same as the cam clutch 100 of the first embodiment arranged along the axial direction, with the end wall part 172 of the switching member 171 that is part of the operating mode switch mechanism 170 being shared in the center.

The switching member 171 includes an annular plate-like end wall part 172, a plurality of cam orientation changing parts 173 integrally formed on both sides of the end wall part 172, each corresponding to each of the plurality of cams 140, and a circumferential wall part 175 that is positioned on the same rotation axis X as that of the inner race 110 and outer race 120 and extends axially from an outer peripheral edge on both sides of the end wall part 172.

This cam clutch can be switched between four operating modes, i.e., a two-way lock mode in which the cam clutch mechanisms 101 on both sides are locked, one-way lock modes in which relative rotation is allowed in both directions for one of the cam clutch mechanisms 101 while the other cam clutch mechanism 101 is locked, and a two-way free mode in which both cam clutch mechanisms 101 are in the free state, by a circumferential movement of the cam orientation changing parts 173, which is achieved by rotating the switching member 171 manually, or by a suitable drive source.

### Embodiment 7

Fig. 29 is a radial cross-sectional view illustrating a configuration of a cam clutch according to a seventh embodiment of the present invention in a plane perpendicular to the rotation axis.

This cam clutch has two clutch mechanisms configured the same as the cam clutch 100 of the first embodiment in a double structure. An inner clutch mechanism 101 is arranged between the inner race 110 and an intermediate race 115, and an outer clutch mechanism 102 is arranged between the intermediate race 115 and the outer race 120, with the end wall part of the switching member that is part of the operating mode switch mechanism being shared.

The intermediate race 115 serves as the outer race in the inner clutch mechanism 101, and as the inner race in the outer clutch mechanism 102.

The switching member has a plurality of cam orientation changing parts 173, each corresponding to each of the inner and outer sets of cams 140.

In the sixth and seventh embodiments, the cam orientation changing parts of the operating mode switch mechanism may have any of the alignment patterns shown in the first to third embodiments. Two sets of cam orientation changing parts for the two clutch mechanisms may have the same alignment pattern, or different alignment patterns.

Further, the shape and structure of the switching member may be changed to cause an axial or radial movement of the cam orientation changing parts.

While embodiments of the present invention have been described in detail, the present invention is not limited to the above-described embodiments and may be carried out with various design changes without departing from the scope of the present invention set forth in the claims.

### [Reference Signs List]

- 100: Cam clutch
- 101: Clutch mechanism
- 102: Clutch mechanism
- 110: Inner race
- 111: Raceway
- 115: Intermediate race
- 120: Outer race
- 121: Raceway
- 125: Recessed groove
- 130: Cam mechanism
- 131: Biasing means
- 135: Cage ring
- 136a: Annular plate
- 136b: Annular plate
- 137: Engagement protrusion
- 138: Brace member
- 139: Garter spring mount groove
- 140: Cam
- 141: Head part
- 142: Radially outer engagement surface
- 143: Garter spring holding groove
- 145: Leg part
- 146: Radially inner engagement surface
- 147: Support part
- 150: Cage rotation stopper
- 151: Annular plate part
- 152: Engagement recess
- 155: Circumferential wall part
- 156: Engagement pawl
- 160: Coaxial alignment member
- 170: Operating mode switch mechanism
- 171: Switching member
- 172: End wall part
- 173: Cam orientation changing part
- 173a: First group of cam orientation changing parts
- 173b: Second group of cam orientation changing parts
- 173c to 173: Third to twelfth group of cam orientation changing parts
- 174: Cam pressing surface
- 175: Circumferential wall part
- 176: Tapered portion
- 180: Control plate
- 181: Teeth
- 181a: First teeth
- 181b: Second teeth
- 181c: Third teeth
- 182: Inclined surface
- 185: Movable element
- 186: Cam pressing member
- α: Reference cam orientation changing part
- β: Cam orientation changing part on one side
- γ: Cam orientation changing part on the other side
- L: Reference line
- O: Rotation axis
- P: Pocket

## Claims

1. A cam clutch (100) comprising:
an inner race (110) and an outer race (120) provided to be rotatable about a same rotation axis relative to each other;
a plurality of cams (140) circumferentially arranged between the inner race (110) and the outer race (120); and
a biasing means (131) biasing each of the plurality of cams (140) to make contact with the inner race (110) and the outer race (120),
the cam clutch (100) including an operating mode switch mechanism (170) that switches operating modes of the cam clutch (100),
the operating mode switch mechanism (170) including cam orientation changing parts (173) that are movable to force the cams (140) to rotate independently of rotation movement of the inner race (110) and the outer race (120),
the cam orientation changing parts (173) each being positioned for each of the cams (140),
wherein at least one cam orientation changing part (173) having a different relative position with respect to one of the cams (140) that corresponds to the cam orientation changing part (173) from, with respect to other cam orientation changing parts (173), a relative position of cams (140) that correspond to the other cam orientation changing parts (173), so **characterised in that** the one of the cams (140) is rotated at a different timing from the other cams (140).

2. The cam clutch (100) according to claim **1,** wherein the plurality of cams (140) are arranged at circumferentially equal intervals.

3. The cam clutch (100) according to claim 1 or **2,** wherein the plurality of cam orientation changing parts (173) are divided into a plurality of groups (173a-173l), the cam orientation changing parts (173) of each of the groups having a same relative position with respect to cams (140) corresponding thereto so as to rotate the corresponding cams (140) at the same timing.

4. The cam clutch (100) according to any of claims 1 to **3,** wherein
the operating mode switch mechanism (170) is configured to move the cam orientation changing parts (173) in a circumferential direction,
the cam orientation changing parts (173) have an alignment pattern designed to include a section where one cam orientation changing part (173a) has a different position angle relative to a reference line from a position angle of another cam orientation changing part (173b), with the reference line being a line that connects a position of one cam orientation changing part (173), which is regarded as a reference cam orientation changing part, and the rotation axis (O), and with the one cam orientation changing part (173) being a cam orientation changing part (173a) that is adjacent the reference cam orientation changing part on one circumferential side, and moreover with the other cam orientation changing part (173) being a cam orientation changing part (173b) that is adjacent the reference cam orientation changing part on another circumferential side.

5. The cam clutch (100) according to claim 4, wherein the alignment pattern of the cam orientation changing parts (173) includes a section where one of two adjacent cam orientation changing parts (173a) has a first position angle 81 relative to the other and a section where one of two adjacent cam orientation changing parts (173b) has a second angle θ2 relative to the other, and these sections alternate each other.

6. The cam clutch (100) according to claim 4, wherein the alignment pattern of the cam orientation changing parts (173) includes a section where part of the cam orientation changing parts (173a) are arranged at a first position angle θ1 in succession, and a section where all the other cam orientation changing parts (173b) are arranged at a second angle θ2 in succession.

7. The cam clutch (100) according to claim 4, wherein the alignment pattern of the cam orientation changing parts (173) is designed such that each of the cam orientation changing parts (173) has a position angle that is different from a position angle of a cam orientation changing part (173) adjacent thereto.

8. The cam clutch (100) according to any of claims 1 to 3, wherein
the operating mode switch mechanism (170) is configured to move the plurality of cam orientation changing parts (173) in an axial direction,
the plurality of cam orientation changing parts (173) each have a tapered portion (176) having a tapered shape at a distal end on one side that faces a corresponding cam (140) and decreases in width frontward in a moving direction of the switching member, and
the plurality of cam orientation changing parts (173) have an alignment pattern designed to include a section where two adjacent cam orientation changing parts (173) have different axial distances from cams (140) corresponding thereto.

9. The cam clutch (100) according to claim 8, wherein the alignment pattern of the cam orientation changing parts (173) is designed such that cam orientation changing parts of a first group (173a) having a first axial distance from cams (140) corresponding thereto and cam orientation changing parts of a second group (173b) having a second axial distance from cams (140) corresponding thereto alternate each other.

10. The cam clutch (100) according to claim 8, wherein the alignment pattern of the cam orientation changing parts (173) is designed to include a section where cam orientation changing parts of a first group (173a) having a first axial distance from cams (140) corresponding thereto are arranged in succession, and a section where cam orientation changing parts of a second group (173b) having a second axial distance from cams (140) corresponding thereto are arranged in succession.

11. The cam clutch (100) according to claim 8, wherein the alignment pattern of the plurality of cam orientation changing parts (173) is designed such that the cam orientation changing parts (173) have different axial distances from cams corresponding thereto.

12. The cam clutch (100) according to any of claims 1 to 3, wherein
the operating mode switch mechanism (170) is configured to move the cam orientation changing parts (173) in a radial direction,
the operating mode switch mechanism (170) includes a control plate (180) that is rotatable and formed with a plurality of teeth (181) on a circumferential surface of a circular plate-like base part, each of the plurality of teeth (181) being formed to gradually increase in distance from a rotation axis (O) to the circumferential surface,
the plurality of cam orientation changing parts (173) each comprise a movable element (185) that is radially moved by rotation of the control plate (180), and an axially extending cam pressing member fixed to the movable element (185), and
the plurality of cam orientation changing parts (173) have an alignment pattern designed to include a section where two adjacent cam orientation changing parts (173) have different radial distances between a contact point between the cam pressing member (186) and a cam (140) corresponding thereto, and a contact point between the movable element (185) and the control plate (180).

13. The cam clutch (100) according to claim 12, wherein the alignment pattern of the plurality of cam orientation changing parts (173) is designed such that cam orientation changing parts of a first group (173a) and cam orientation changing parts of a second group (173b) alternate each other, the first group having a first radial distance and the second group having a second radial distance, the first and second radial distances each being a radial distance between a contact point between the cam pressing member (186) and a cam (140) corresponding thereto, and a contact point between the movable element (185) and the control plate (180).

14. The cam clutch (100) according to claim 12, wherein the alignment pattern of the plurality of cam orientation changing parts (173) is designed to include a section where cam orientation changing parts of a first group (173a) are arranged in succession, and a section where cam orientation changing parts of a second group (173b) are arranged in succession, the first group having a first radial distance and the second group having a second radial distance, the first and second radial distances each being a radial distance between a contact point between the cam pressing member (186) and a corresponding cam (140), and a contact point between the movable element (185) and the control plate (180).

15. The cam clutch (100) according to claim 12, wherein the alignment pattern of the plurality of cam orientation changing parts (173) is designed such that the cam orientation changing parts (173) have different radial distances between a contact point between the cam pressing member (186) and a cam (140) corresponding thereto, and a contact point between the movable element (185) and the control plate(180).

16. The cam clutch (100) according to any of claims 1 to 15, wherein the cams (140) include first cams and second cams, the first cams and the second cams engaging with the inner race (110) and outer race (120) in different directions.

## Patentansprüche

1. Nockenkupplung (100), umfassend:
einen Innenring (110) und einen Außenring (120), die dazu vorgesehen sind, um dieselbe Drehachse relativ zueinander drehbar zu sein;
eine Vielzahl von Nocken (140), die in Umfangsrichtung zwischen dem Innenring (110) und dem Außenring (120) angeordnet sind; und
ein Vorspannmittel (131), das jeden der Vielzahl von Nocken (140) derart vorspannt, dass dieser mit dem Innenring (110) und dem Außenring (120) in Kontakt gelangt,
wobei die Nockenkupplung (100) einen Betriebsmodusumschaltmechanismus (170) aufweist, der die Betriebsmodi der Nockenkupplung (100) umschaltet,
wobei der Betriebsmodusumschaltmechanismus (170) Nockenausrichtungsänderungsteile (173) aufweist, die bewegbar sind, um die Nocken (140) unabhängig von einer Drehbewegung des Innenrings (110) und des Außenrings (120) zwangsweise zu drehen,
wobei die Nockenausrichtungsänderungsteile (173) jeweils für einen der Nocken (140) positioniert sind,
wobei mindestens ein Nockenausrichtungsänderungsteil (173) bezüglich eines diesem Nockenausrichtungsänderungsteil (173) entsprechenden Nockens (140) eine relative Position aufweist, die von den relativen Positionen der anderen Nockenausrichtungsänderungsteile (173) bezüglich der diesen Nockenausrichtungsänderungsteilen (173) entsprechenden Nocken (140) verschieden ist, **dadurch gekennzeichnet, dass** der eine der Nocken (140) zu einem anderen Zeitpunkt als die anderen Nocken (140) gedreht wird.

2. Nockenkupplung (100) nach Anspruch 1, wobei die Vielzahl von Nocken (140) in Umfangsrichtung in gleichen Abständen angeordnet ist.

3. Nockenkupplung (100) nach Anspruch 1 oder 2, wobei die Vielzahl von Nockenausrichtungsänderungsteilen (173) in eine Vielzahl von Gruppen (173a-173l) unterteilt ist, wobei die Nockenausrichtungsänderungsteile (173) jeder der Gruppen bezüglich der ihnen entsprechenden Nocken (140) dieselbe relative Position aufweisen, so dass die entsprechenden Nocken (140) zum selben Zeitpunkt gedreht werden.

4. Nockenkupplung (100) nach einem der Ansprüche 1 bis 3, wobei
der Betriebsmodusumschaltmechanismus (170) dazu ausgebildet ist, die Nockenausrichtungsänderungsteile (173) in einer Umfangsrichtung zu bewegen,
die Nockenausrichtungsänderungsteile (173) ein Anordnungsmuster aufweisen, das so ausgelegt ist, dass es einen Abschnitt umfasst, in dem ein Nockenausrichtungsänderungsteil (173a) bezogen auf eine Referenzlinie einen anderen Positionswinkel als den Positionswinkel eines anderen Nockenausrichtungsänderungsteils (173b) aufweist, wobei die Referenzlinie eine Linie ist, die eine Position eines als Referenz-Nockenausrichtungsänderungsteil betrachteten Nockenausrichtungsänderungsteils (173) mit der Drehachse (O) verbindet, wobei das eine Nockenausrichtungsänderungsteil (173) ein Nockenausrichtungsänderungsteil (173a) ist, das dem Referenz-Nockenausrichtungsänderungsteil auf einer Umfangsseite benachbart ist, und wobei ferner das andere Nockenausrichtungsänderungsteil (173) ein Nockenausrichtungsänderungsteil (173b) ist, das dem Referenz-Nockenausrichtungsänderungsteil auf der anderen Umfangsseite benachbart ist.

5. Nockenkupplung (100) nach Anspruch 4, wobei das Anordnungsmuster der Nockenausrichtungsänderungsteile (173) einen Abschnitt, in dem eines von zwei benachbarten Nockenausrichtungsänderungsteilen (173a) relativ zu dem anderen einen ersten Positionswinkel θ1 aufweist, und einen Abschnitt umfasst, in dem eines von zwei benachbarten Nockenausrichtungsänderungsteilen (173b) relativ zu dem anderen einen zweiten Winkel θ2 aufweist, wobei sich diese Abschnitte abwechseln.

6. Nockenkupplung (100) nach Anspruch 4, wobei das Anordnungsmuster der Nockenausrichtungsänderungsteile (173) einen Abschnitt, in dem einige der Nockenausrichtungsänderungsteile (173a) mit einem ersten Positionswinkel θ1 aufeinanderfolgend angeordnet sind, und einen Abschnitt umfasst, in dem alle anderen Nockenausrichtungsänderungsteile (173b) mit einem zweiten Winkel θ2 aufeinanderfolgend angeordnet sind.

7. Nockenkupplung (100) nach Anspruch 4, wobei das Anordnungsmuster der Nockenausrichtungsänderungsteile (173) derart ausgelegt ist, dass jedes der Nockenausrichtungsänderungsteile (173) einen Positionswinkel aufweist, der vom Positionswinkel eines diesem benachbarten Nockenausrichtungsänderungsteils (173) verschieden ist.

8. Nockenkupplung (100) nach einem der Ansprüche 1 bis 3, wobei
der Betriebsmodusumschaltmechanismus (170) dazu ausgebildet ist, die Vielzahl von Nockenausrichtungsänderungsteilen (173) in einer axialen Richtung zu bewegen,
die Vielzahl von Nockenausrichtungsänderungsteilen (173) jeweils einen verjüngten Abschnitt (176) aufweist, der an einem distalen Ende auf einer einem entsprechenden Nocken (140) zugewandten Seite eine sich verjüngende Form aufweist und nach vorne in einer Bewegungsrichtung des Umschaltelements an Breite abnimmt, und
die Vielzahl von Nockenausrichtungsänderungsteilen (173) ein Anordnungsmuster aufweisen, das so ausgelegt ist, dass es einen Abschnitt umfasst, in dem zwei benachbarte Nockenausrichtungsänderungsteile (173) unterschiedliche axiale Abstände von den ihnen entsprechenden Nocken (140) aufweisen.

9. Nockenkupplung (100) nach Anspruch 8, wobei das Anordnungsmuster der Nockenausrichtungsänderungsteile (173) derart ausgelegt ist, dass sich Nockenausrichtungsänderungsteile einer ersten Gruppe (173a), die einen ersten axialen Abstand von den ihnen entsprechenden Nocken (140) aufweisen, und Nockenausrichtungsänderungsteile einer zweiten Gruppe (173b), die einen zweiten axialen Abstand von den ihnen entsprechenden Nocken (140) aufweisen, abwechseln.

10. Nockenkupplung (100) nach Anspruch 8, wobei das Anordnungsmuster der Nockenausrichtungsänderungsteile (173) so ausgelegt ist, dass es einen Abschnitt, in dem Nockenausrichtungsänderungsteile einer ersten Gruppe (173a), die einen ersten axialen Abstand von den ihnen entsprechenden Nocken (140) aufweisen, aufeinanderfolgend angeordnet sind, und einen Abschnitt umfasst, in dem Nockenausrichtungsänderungsteile einer zweiten Gruppe (173b), die einen zweiten axialen Abstand von den ihnen entsprechenden Nocken (140) aufweisen, aufeinanderfolgend angeordnet sind.

11. Nockenkupplung (100) nach Anspruch 8, wobei das Anordnungsmuster der Vielzahl von Nockenausrichtungsänderungsteilen (173) derart ausgelegt ist, dass die Nockenausrichtungsänderungsteile (173) unterschiedliche axiale Abstände von den ihnen entsprechenden Nocken aufweisen.

12. Nockenkupplung (100) nach einem der Ansprüche 1 bis 3, wobei
der Betriebsmodusumschaltmechanismus (170) dazu ausgebildet ist, die Nockenausrichtungsänderungsteile (173) in einer radialen Richtung zu bewegen,
der Betriebsmodusumschaltmechanismus (170) eine drehbare Steuerplatte (180) aufweist, die an einer Umfangsfläche eines kreisförmigen plattenartigen Basisabschnitts mit einer Vielzahl von Zähnen (181) ausgebildet ist, wobei jeder der Vielzahl von Zähnen (181) derart ausgebildet ist, dass der Abstand von einer Drehachse (O) zu der Umfangsfläche allmählich zunimmt,
die Vielzahl von Nockenausrichtungsänderungsteilen (173) jeweils ein bewegliches Element (185), das durch eine Drehung der Steuerplatte (180) radial bewegt wird, und ein sich axial erstreckendes Nockenandrückelement aufweist, das an dem beweglichen Element (185) befestigt ist, und
die Vielzahl von Nockenausrichtungsänderungsteilen (173) ein Anordnungsmuster aufweisen, das so ausgelegt ist, dass es einen Abschnitt umfasst, in dem zwei benachbarte Nockenausrichtungsänderungsteile (173) unterschiedliche radiale Abstände zwischen einem Berührungspunkt zwischen dem Nockenandrückelement (186) und einem diesem entsprechenden Nocken (140) und einem Berührungspunkt zwischen dem beweglichen Element (185) und der Steuerplatte (180) aufweisen.

13. Nockenkupplung (100) nach Anspruch 12, wobei das Anordnungsmuster der Vielzahl von Nockenausrichtungsänderungsteilen (173) derart ausgelegt ist, dass sich Nockenausrichtungsänderungsteile einer ersten Gruppe (173a) und Nockenausrichtungsänderungsteile einer zweiten Gruppe (173b) abwechseln, wobei die erste Gruppe einen ersten radialen Abstand und die zweite Gruppe einen zweiten radialen Abstand aufweist und der erste und der zweite radiale Abstand jeweils ein radialer Abstand zwischen einem Berührungspunkt zwischen dem Nockenandrückelement (186) und einem diesem entsprechenden Nocken (140) und einem Berührungspunkt zwischen dem beweglichen Element (185) und der Steuerplatte (180) sind.

14. Nockenkupplung (100) nach Anspruch 12, wobei das Anordnungsmuster der Vielzahl von Nockenausrichtungsänderungsteilen (173) so ausgelegt ist, dass es einen Abschnitt, in dem Nockenausrichtungsänderungsteile einer ersten Gruppe (173a) aufeinanderfolgend angeordnet sind, und einen Abschnitt umfasst, in dem Nockenausrichtungsänderungsteile einer zweiten Gruppe (173b) aufeinanderfolgend angeordnet sind, wobei die erste Gruppe einen ersten radialen Abstand und die zweite Gruppe einen zweiten radialen Abstand aufweist und der erste und der zweite radiale Abstand jeweils ein radialer Abstand zwischen einem Berührungspunkt zwischen dem Nockenandrückelement (186) und einem entsprechenden Nocken (140) und einem Berührungspunkt zwischen dem beweglichen Element (185) und der Steuerplatte (180) sind.

15. Nockenkupplung (100) nach Anspruch 12, wobei das Anordnungsmuster der Vielzahl von Nockenausrichtungsänderungsteilen (173) derart ausgelegt ist, dass die Nockenausrichtungsänderungsteile (173) unterschiedliche radiale Abstände zwischen einem Berührungspunkt zwischen dem Nockenandrückelement (186) und einem diesem entsprechenden Nocken (140) und einem Berührungspunkt zwischen dem beweglichen Element (185) und der Steuerplatte (180) aufweisen.

16. Nockenkupplung (100) nach einem der Ansprüche 1 bis 15, wobei die Nocken (140) erste Nocken und zweite Nocken umfassen, wobei die ersten Nocken und die zweiten Nocken in unterschiedlichen Richtungen mit dem Innenring (110) und dem Außenring (120) in Eingriff stehen.

## Revendications

1. Embrayage à cames (100) comprenant :
une bague intérieure (110) et une bague extérieure (120) prévues pour être rotatives autour d'un même axe de rotation l'une par rapport à l'autre ;
une pluralité de cames (140) agencées circonférentiellement entre la bague intérieure (110) et la bague extérieure (120) ;
un moyen de sollicitation (131) sollicitant chacune de la pluralité de cames (140) pour entrer en contact avec la bague intérieure (110) et la bague extérieure (120),
l'embrayage à cames (100) incluant en outre un mécanisme de commutation de mode de fonctionnement (170) qui commute des modes de fonctionnement de l'embrayage à cames (100),
le mécanisme de commutation de mode de fonctionnement (170) incluant des parties de changement d'orientation de came (173) mobiles pour forcer les cames (140) à tourner indépendamment d'un mouvement de rotation de la bague intérieure (110) et de la bague extérieure (120),
les parties de changement d'orientation de came (173) étant chacune positionnées pour chacune des cames (140), dans lequel au moins une partie de changement d'orientation de came (173) présentant une position relative par rapport à l'une des cames (140) qui correspond à la partie de changement d'orientation de came (173) différente, par rapport à d'autres parties de changement d'orientation de came (173), d'une position relative de cames (140) qui correspondent aux autres parties de changement d'orientation de came (173), **caractérisé en ce que** l'une des cames (140) est tournée à un moment différent des autres cames (140).

2. Embrayage à cames (100) selon la revendication 1, dans lequel la pluralité de cames (140) sont agencées à des intervalles circonférentiellement égaux.

3. Embrayage à cames (100) selon la revendication 1 ou 2, dans lequel la pluralité de parties de changement d'orientation de came (173) sont divisées en une pluralité de groupes (173a-1731), les parties de changement d'orientation de came (173) de chacun des groupes présentant une même position relative par rapport aux cames (140) correspondantes de manière à faire tourner les cames (140) correspondantes au même moment.

4. Embrayage à cames (100) selon l'une quelconque des revendications 1 à 3, dans lequel
le mécanisme de commutation de mode de fonctionnement (170) est configuré pour déplacer les parties de changement d'orientation de came (173) dans une direction circonférentielle,
les parties de changement d'orientation de came (173) présentent un motif d'alignement conçu pour inclure une section où une partie de changement d'orientation de came (173a) présente un angle de position par rapport à une ligne de référence différent d'un angle de position d'une autre partie de changement d'orientation de came (173b), la ligne de référence étant une ligne qui relie une position d'une partie de changement d'orientation de came (173), qui est considérée comme une partie de changement d'orientation de came de référence, et l'axe de rotation (O), et la partie de changement d'orientation de came (173) étant une partie de changement d'orientation de came (173a) qui est adjacente à la partie de changement d'orientation de came de référence d'un côté circonférentiel, et en outre l'autre partie de changement d'orientation de came (173) étant une partie de changement d'orientation de came (173b) qui est adjacente à la partie de changement d'orientation de came de référence d'un autre côté circonférentiel.

5. Embrayage à cames (100) selon la revendication 4, dans lequel le motif d'alignement des parties de changement d'orientation de came (173) inclut une section où l'une des deux parties de changement d'orientation de came adjacentes (173a) présente un premier angle de position θ1 par rapport à l'autre et une section où l'une des deux parties de changement d'orientation de came adjacentes (173b) présente un second angle θ2 par rapport à l'autre, et ces sections alternent entre elles.

6. Embrayage à cames (100) selon la revendication 4, dans lequel le motif d'alignement des parties de changement d'orientation de came (173) inclut une section où une partie des parties de changement d'orientation de came (173a) est agencée à un premier angle de position θ1 successivement, et une section où toutes les autres parties de changement d'orientation de came (173b) sont agencées à un second angle θ2 successivement.

7. Embrayage à cames (100) selon la revendication 4, dans lequel le motif d'alignement des parties de changement d'orientation de came (173) est conçu de sorte que chacune des parties de changement d'orientation de came (173) présente un angle de position qui est différent d'un angle de position d'une partie de changement d'orientation de came (173) adjacente à celle-ci.

8. Embrayage à cames (100) selon l'une quelconque des revendications 1 à 3, dans lequel
le mécanisme de commutation de mode de fonctionnement (170) est configuré pour déplacer la pluralité de parties de changement d'orientation de came (173) dans une direction axiale,
la pluralité de parties de changement d'orientation de came (173) présentent chacune une portion (176) effilée présentant une forme effilée à une extrémité distale d'un côté qui fait face à une came (140) correspondante et diminue en largeur vers l'avant dans une direction de déplacement de l'organe de commutation, et
la pluralité de parties de changement d'orientation de came (173) présentent un motif d'alignement conçu pour inclure une section où deux parties de changement d'orientation de came (173) adjacentes présentent des distances axiales différentes des cames (140) correspondantes.

9. Embrayage à cames (100) selon la revendication 8, dans lequel
le motif d'alignement des parties de changement d'orientation de came (173) est conçu de sorte que des parties de changement d'orientation de came d'un premier groupe (173a) présentant une première distance axiale des cames (140) correspondantes et des parties de changement d'orientation de came d'un second groupe (173b) présentant une seconde distance axiale des cames (140) correspondantes alternent entre elles.

10. Embrayage à cames (100) selon la revendication 8, dans lequel le motif d'alignement des parties de changement d'orientation de came (173) est conçu pour inclure une section dans laquelle des parties de changement d'orientation de came d'un premier groupe (173a) présentant une première distance axiale par rapport aux cames (140) correspondantes sont agencées successivement, et une section dans laquelle des parties de changement d'orientation de came d'un second groupe (173b) présentant une seconde distance axiale par rapport aux cames (140) correspondantes sont agencées successivement.

11. Embrayage à cames (100) selon la revendication 8, dans lequel le motif d'alignement de la pluralité de parties de changement d'orientation de came (173) est conçu de sorte que les parties de changement d'orientation de came (173) présentent différentes distances axiales par rapport aux cames correspondantes.

12. Embrayage à cames (100) selon l'une quelconque des revendications 1 à 3, dans lequel
le mécanisme de commutation de mode de fonctionnement (170) est configuré pour déplacer les parties de changement d'orientation de came (173) dans une direction radiale,
le mécanisme de commutation de mode de fonctionnement (170) inclut une plaque de commande (180) qui est rotative et formée avec une pluralité de dents (181) sur une surface circonférentielle d'une partie de base semblable à une plaque circulaire, chacune de la pluralité de dents (181) étant formée pour augmenter progressivement la distance d'un axe de rotation (O) à la surface circonférentielle,
la pluralité de parties de changement d'orientation de came (173) comprennent chacune un élément mobile (185) qui est déplacé radialement par rotation de la plaque de commande (180), et un organe de pression de came s'étendant axialement fixé à l'élément mobile (185), et
la pluralité de parties de changement d'orientation de came (173) présentent un motif d'alignement conçu pour inclure une section où deux parties de changement d'orientation de came (173) adjacentes présentent des distances radiales différentes entre un point de contact entre l'organe de pression de came (186) et une came (140) correspondante, et un point de contact entre l'élément mobile (185) et la plaque de commande (180).

13. Embrayage à cames (100) selon la revendication 12, dans lequel le motif d'alignement de la pluralité de parties de changement d'orientation de came (173) est conçu de sorte que des parties de changement d'orientation de came d'un premier groupe (173a) et des parties de changement d'orientation de came d'un second groupe (173b) alternent entre elles, le premier groupe présentant une première distance radiale et le second groupe présentant une seconde distance radiale, les première et seconde distances radiales étant chacune une distance radiale entre un point de contact entre l'organe de pression de came (186) et une came (140) correspondante, et un point de contact entre l'élément mobile (185) et la plaque de commande (180).

14. Embrayage à cames (100) selon la revendication 12, dans lequel le motif d'alignement de la pluralité de parties de changement d'orientation de came (173) est conçu pour inclure une section où des parties de changement d'orientation de came d'un premier groupe (173a) sont agencées successivement, et une section où des parties de changement d'orientation de came d'un second groupe (173b) sont agencées successivement, le premier groupe présentant une première distance radiale et le second groupe présentant une seconde distance radiale, les première et seconde distances radiales étant chacune une distance radiale entre un point de contact entre l'organe de pression de came (186) et une came (140) correspondante, et un point de contact entre l'élément mobile (185) et la plaque de commande (180).

15. Embrayage à cames (100) selon la revendication 12, dans lequel le motif d'alignement de la pluralité de parties de changement d'orientation de came (173) est conçu de sorte que les parties de changement d'orientation de came (173) présentent des distances radiales différentes entre un point de contact entre l'organe de pression de came (186) et une came (140) correspondante, et un point de contact entre l'élément mobile (185) et la plaque de commande (180).

16. Embrayage à cames (100) selon l'une quelconque des revendications 1 à 15, dans lequel les cames (140) incluent des premières cames et des secondes cames, les premières cames et les secondes cames se mettant en prise avec la bague intérieure (110) et la bague extérieure (120) dans des directions différentes.
